# EUROPEAN PATENT APPLICATION

(11) **EP 4 429 217 A1**
(43) Date of publication of application: **11.09.2024**
(21) Application number: 22909825.6
(22) Date of filing: 13.12.2022
(51) Int. Cl.: H04M 1/72454

(54) **CONTENT SHARING METHOD AND TERMINAL DEVICE**

(30) Priority: 24.12.2021 CN 202111601985
(71) Applicant: Huawei Technologies Co., Ltd., Shenzhen, Guangdong 518129 (CN)
(72) Inventor: SUN, Ke, Shenzhen, Guangdong 518129 (CN); XU, Jie, Shenzhen, Guangdong 518129 (CN); LONG, Jiayu, Shenzhen, Guangdong 518129 (CN)
(74) Representative: Goddar, Heinz J.
(86) International application number: PCT/CN2022/138793
(87) International publication number: WO 2023/116511

(57) **Abstract**

This application relates to the field of communication technologies, and provides a content sharing method and a terminal device. The method includes: The terminal device detects a target device and a tilting operation performed on the terminal device, where a distance between the target device and the terminal device is less than or equal to a target distance; and the terminal device shares content with the target device in response to the tilting operation if the target device and the tilting operation are detected. According to the technical solutions provided in this application, an operation process of a content sharing function can be simplified, and there is greater convenience for a user to use the content sharing function.

## Description

This application claims priority to Chinese Patent Application No. 202111601985.X, filed with the China National Intellectual Property Administration on December 24, 2021 and entitled "CONTENT SHARING METHOD AND TERMINAL DEVICE", which is incorporated herein by reference in its entirety.

### TECHNICAL FIELD

This application relates to the field of communication technologies, and in particular, to a content sharing method and a terminal device.

### BACKGROUND

With popularization of terminal devices, a user owns an increasing number of terminal devices. For example, one user owns a plurality of devices such as a mobile phone, a tablet computer, and a laptop computer. For convenient use for a user, at present, most terminal devices support a content sharing function that is based on a near field communication technology, and the user may conveniently share content, for example, a picture, a document, and a video or audio among a plurality of terminal devices by using the function.

At present, when a user wants to share content among a plurality of terminal devices by using the content sharing function, the user usually needs to enable near field communication functions on all the terminal devices and then perform a plurality of operations in interfaces displayed on the terminal devices to implement connections and content sharing among the terminal devices. The operations are cumbersome.

### SUMMARY

In view of this, this application provides a content sharing method and a terminal device, to simplify an operation process of a content sharing function and bring greater convenience for a user to use the content sharing function.

To achieve the foregoing objective, according to a first aspect, an embodiment of this application provides a content sharing method, applied to a terminal device, where the method includes:
detecting a target device and a tilting operation performed on the terminal device, where a distance between the target device and the terminal device is less than or equal to a target distance; and
sharing content with the target device in response to the tilting operation if the target device and the tilting operation are detected.

According to the content sharing method provided in this embodiment of this application, the terminal device may share content with the target device if the target device and the tilting operation performed on the terminal device are detected. In this way, a user can quickly share content between two devices by placing the terminal device close to a nearby device and tilting the terminal device. Therefore, the method can simplify an operation process of a content sharing function and bring greater convenience for the user to use the content sharing function. In addition, the method does not rely on an NFC chip, and another positioning function with lower costs and stronger functionality may be used to detect the target device.

In a possible implementation of the first aspect, the content is shared with the target device in response to the tilting operation if a tilting direction of the tilting operation is toward the target device. In this way, cases of incorrect sharing can be reduced.

In a possible implementation of the first aspect, if a plurality of target devices are detected, in response to the tilting operation, content is shared with a target device which the tilting direction of the tilting operation is toward. In this way, it can be convenient for the user to determine a device with which the content is to be shared, to improve accuracy of content sharing.

In a possible implementation of the first aspect, if a plurality of target devices are detected, content is shared with each target device in response to the tilting operation. In this way, the content can be shared with a plurality of devices at the same time, to bring greater convenience for content sharing.

In a possible implementation of the first aspect, the detecting a target device includes:
determining at least one candidate device based on a first positioning function, where a distance between the at least one candidate device and the terminal device is less than a first distance, and the first distance is greater than the target distance;
notifying the at least one candidate device to enable a second positioning function; and
determining the target device from the at least one candidate device based on the second positioning function, where
positioning precision of the first positioning function is less than positioning precision of the second positioning function, or power consumption of the first positioning function is greater than power consumption of the second positioning function.

In the foregoing implementation, power consumption of each device can be reduced.

In a possible implementation of the first aspect, the first positioning function includes at least one of a Bluetooth positioning function and a Wi-Fi positioning function.

The second positioning function includes at least one of an ultrasonic positioning function, a millimeter wave positioning function, and an ultra-wideband positioning function.

In a possible implementation of the first aspect, the detecting a tilting operation includes:
determining that the tilting operation is detected if it is detected that a first operation performed on the terminal device satisfies a first condition, where
the first operation is an operation of rotating the terminal device around a target rotation axis, the target rotation axis is an axis along a length direction or a width direction of the terminal device, and the first condition includes that the terminal device is rotated by a first angle within a first time length, where the first angle is within a first angle range.

In the foregoing implementation, cases of false detection can be reduced.

In a possible implementation of the first aspect, when the first operation is performed, the terminal device is in a state with a screen facing up. In this way, cases of incorrectly triggering a tilting operation can be reduced, and when the terminal device is in the state with the screen facing up, it is convenient for a user to perform an operation. Therefore, there is greater convenience for a user to perform an operation.

In a possible implementation of the first aspect, when the terminal device is in the state with the screen facing up, an included angle between a normal direction of the screen of the terminal device and any horizontal direction is greater than 0 degrees and less than 180 degrees. In this way, a specific angle error can be allowed when the user performs an operation, to bring greater convenience for the user to perform the operation.

In a possible implementation of the first aspect, the first angle range is [15°, 105°], and the first angle within the first angle range satisfies 15°≤the first angle≤105°.

In a possible implementation of the first aspect, the first condition further includes:
after the terminal device is rotated by the first angle within the first time length, the terminal device stays stationary for a second time length; and/or
in a process in which the terminal device is rotated by the first angle, a rotational angular acceleration is greater than or equal to a first angular acceleration.

In the foregoing implementation, cases of incorrectly triggering a tilting operation can be reduced, and accuracy of a detection result can be improved.

In a possible implementation of the first aspect, the method further includes:
determining that the tilting operation is detected if it is detected that the first operation does not satisfy the first condition and that a second operation performed after the first operation satisfies a second condition, where
the second operation is an operation of rotating the terminal device around the target rotation axis, a rotation direction of the second operation is the same as a rotation direction of the first operation, and the second condition includes that the terminal device is rotated by a second angle within a third time length, where the second angle is within a second angle range.

In the foregoing implementation, there is greater convenience for a user.

In a possible implementation of the first aspect, the second condition further includes at least one of the following:
after the terminal device is rotated by the second angle within the third time length, the terminal device stays stationary for a fourth time length;
the third time length is less than the first time length;
a lower limit of an angle within the second angle range is less than a lower limit of an angle within the first angle range; and
an upper limit of an angle within the second angle range is less than an upper limit of an angle within the first angle range.

In a possible implementation of the first aspect, an operation of detecting the target device is started if it is detected that the terminal device is in a non-stationary state. This can save power.

In a possible implementation of the first aspect, the operation of detecting the target device is started if it is detected that the terminal device is in a moving state. This can further save power.

In a possible implementation of the first aspect, an operation of detecting the target device is started if the tilting operation is detected. In this way, when a user moves the terminal device close to the target device, but does not perform the tilting operation with no intention to share content, the terminal device does not start a process of detecting the target device, so that processing resources can be saved and energy consumption can be reduced.

In a possible implementation of the first aspect, the content shared with the target device includes at least one of the following: a file, projected content, and application running information.

In a possible implementation of the first aspect, the method further includes: sending a position relationship between the terminal device and the target device to the target device in response to the tilting operation, where the position relationship is used by the target device to display, on a side of a screen closer to the terminal device, the content shared by the terminal device.

In the foregoing implementation, a user requirement can be better satisfied, and flexibility of content sharing can be improved for a user.

In a possible implementation of the first aspect, the target device and the terminal device are in a same local area network, and/or the terminal device is a trusted device of the target device; and
a same account is logged in on the trusted device of the target device and the target device, or an account logged in on the trusted device of the target device is a trusted account of an account logged in on the target device.

In the foregoing implementation, there is higher security of content sharing.

According to a second aspect, an embodiment of this application provides a content sharing apparatus, used in a terminal device, where the apparatus includes a processing module and a communication module.

The processing module is configured to: detect a target device and a tilting operation performed on the terminal device; and share content with the target device by using the communication module in response to the tilting operation if the target device and the tilting operation are detected, where a distance between the target device and the terminal device is less than or equal to a target distance.

In a possible implementation of the second aspect, the processing module is specifically configured to share the content with the target device by using the communication module in response to the tilting operation if a tilting direction of the tilting operation is toward the target device.

In a possible implementation of the second aspect, the processing module is specifically configured to: if a plurality of target devices are detected, share, by using the communication module in response to the tilting operation, content with a target device which the tilting direction of the tilting operation is toward.

In a possible implementation of the second aspect, the processing module is specifically configured to: if a plurality of target devices are detected, share content with each target device by using the communication module in response to the tilting operation.

In a possible implementation of the second aspect, the processing module is specifically configured to:
determine at least one candidate device based on a first positioning function, where a distance between the at least one candidate device and the terminal device is less than a first distance, and the first distance is greater than the target distance;
notify, by using the communication module, the at least one candidate device to enable a second positioning function; and
determine the target device from the at least one candidate device based on the second positioning function, where
positioning precision of the first positioning function is less than positioning precision of the second positioning function, or power consumption of the first positioning function is greater than power consumption of the second positioning function.

In a possible implementation of the second aspect, the first positioning function includes at least one of a Bluetooth positioning function and a Wi-Fi positioning function.

The second positioning function includes at least one of an ultrasonic positioning function, a millimeter wave positioning function, and an ultra-wideband positioning function.

In a possible implementation of the second aspect, the processing module is specifically configured to:
determining that the tilting operation is detected if it is detected that a first operation performed on the terminal device satisfies a first condition, where
the first operation is an operation of rotating the terminal device around a target rotation axis, the target rotation axis is an axis along a length direction or a width direction of the terminal device, and the first condition includes that the terminal device is rotated by a first angle within a first time length, where the first angle is within a first angle range.

In a possible implementation of the second aspect, when the first operation is performed, the terminal device is in a state with a screen facing up.

In a possible implementation of the second aspect, when the terminal device is in the state with the screen facing up, an included angle between a normal direction of the screen of the terminal device and any horizontal direction is greater than 0 degrees and less than 180 degrees.

In a possible implementation of the second aspect, the first angle range is greater than or equal to 15° and less than or equal to 105°.

In a possible implementation of the second aspect, the first condition further includes:
after the terminal device is rotated by the first angle within the first time length, the terminal device stays stationary for a second time length; and/or
in a process in which the terminal device is rotated by the first angle, a rotational angular acceleration is greater than or equal to a first angular acceleration.

In a possible implementation of the second aspect, the processing module is further configured to:
determine that the tilting operation is detected if it is detected that the first operation does not satisfy the first condition and that a second operation performed after the first operation satisfies a second condition, where
the second operation is an operation of rotating the terminal device around the target rotation axis, a rotation direction of the second operation is the same as a rotation direction of the first operation, and the second condition includes that the terminal device is rotated by a second angle within a third time length, where the second angle is within a second angle range.

In a possible implementation of the second aspect, the second condition further includes at least one of the following:
after the terminal device is rotated by the second angle within the third time length, the terminal device stays stationary for a fourth time length;
the third time length is less than the first time length;
a lower limit of an angle within the second angle range is less than a lower limit of an angle within the first angle range; and
an upper limit of an angle within the second angle range is less than an upper limit of an angle within the first angle range.

In a possible implementation of the second aspect, the processing module is further configured to start an operation of detecting the target device if it is detected that the terminal device is in a non-stationary state.

In a possible implementation of the second aspect, the processing module is further configured to start the operation of detecting the target device if it is detected that the terminal device is in a moving state.

In a possible implementation of the second aspect, the processing module is further configured to start an operation of detecting the target device if the tilting operation is detected.

In a possible implementation of the second aspect, the content shared with the target device includes at least one of the following: a file, projected content, and application running information.

In a possible implementation of the second aspect, the processing module is further configured to send a position relationship between the terminal device and the target device to the target device by using the communication module in response to the tilting operation, where the position relationship is used by the target device to display, on a side of a screen closer to the terminal device, the content shared by the terminal device.

In a possible implementation of the second aspect, the target device and the terminal device are in a same local area network, and/or the terminal device is a trusted device of the target device; and
a same account is logged in on the trusted device of the target device and the target device, or an account logged in on the trusted device of the target device is a trusted account of an account logged in on the target device.

According to a third aspect, an embodiment of this application provides a terminal device, including a memory and a processor. The memory is configured to store a computer program, and the processor is configured to enable the terminal device to perform the method according to the first aspect or any implementation of the first aspect when the computer program is invoked.

According to a fourth aspect, an embodiment of this application provides a computer-readable storage medium storing a computer program. When the computer program is executed by a processor, the method according to the first aspect or any implementation of the first aspect is implemented.

According to a fifth aspect, an embodiment of this application provides a computer program product. When the computer program product runs on a terminal device, the terminal device is enabled to perform the method according to the first aspect or any implementation of the first aspect.

According to a sixth aspect, an embodiment of this application provides a chip system, including a processor. The processor is coupled to a memory, and the processor executes a computer program stored in the memory, to implement the method according to the first aspect or any implementation of the first aspect. The chip system may be a single chip or a chip module including a plurality of chips.

It should be understood that, for beneficial effect of the second aspect to the sixth aspect, refer to related descriptions in the first aspect. Details are not described herein again.

### BRIEF DESCRIPTION OF DRAWINGS

FIG. 1 is a schematic diagram of a system architecture of a content sharing system according to an embodiment of this application;
FIG. 2 to FIG. 4 are schematic diagrams of several content sharing manners according to an embodiment of this application;
FIG. 5A to FIG. 5C are schematic diagrams of some content sharing processes according to an embodiment of this application;
FIG. 6 is a schematic diagram of an application scenario according to an embodiment of this application;
FIG. 7 is a schematic flowchart of a content sharing method according to an embodiment of this application;
FIG. 8 is a schematic diagram of a user interface according to an embodiment of this application;
FIG. 9 is a schematic diagram of a coordinate system of a terminal device according to an embodiment of this application;
FIG. 10 is a schematic diagram of a tilt angle in a normal direction of a screen of a terminal device according to an embodiment of this application;
FIG. 11 is a schematic diagram of an angle of rotation of a terminal device according to an embodiment of this application;
FIG. 12 is a schematic diagram of a tilting operation according to an embodiment of this application;
FIG. 13A to FIG. 13C are schematic diagrams of some other content sharing processes according to an embodiment of this application;
FIG. 14A to FIG. 14C are schematic diagrams of some other content sharing processes according to an embodiment of this application;
FIG. 15A to FIG. 15C are schematic diagrams of still other content sharing processes according to an embodiment of this application;
FIG. 16 is a schematic diagram of some other user interfaces according to an embodiment of this application;
FIG. 17 is a schematic flowchart of another content sharing method according to an embodiment of this application;
FIG. 18 is a schematic diagram of a structure of a content sharing apparatus according to an embodiment of this application; and
FIG. 19 is a schematic diagram of a structure of a terminal device according to an embodiment of this application.

### DESCRIPTION OF EMBODIMENTS

Embodiments of this application are described below with reference to the accompanying drawings in embodiments of this application. It should be understood that terms used in implementations of embodiments of this application are merely intended to explain specific embodiments of this application, but not intended to limit this application. The following several specific embodiments may be combined with each other, and a same or similar concept or process may not be described repeatedly in some embodiments.

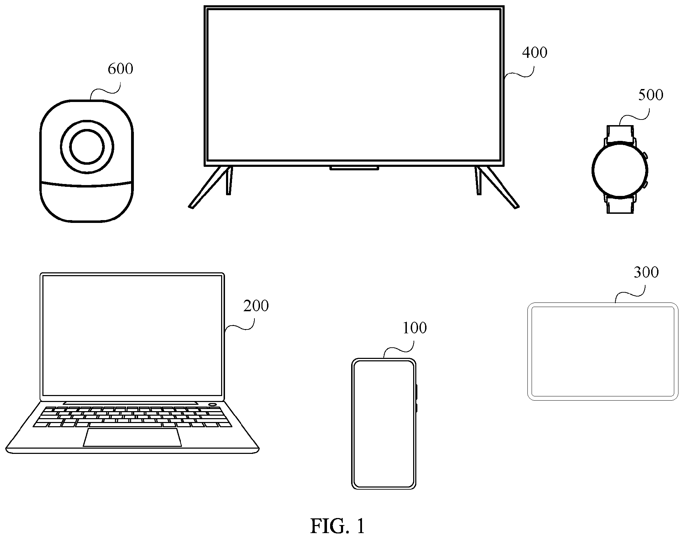

First, a content sharing system in embodiments of this application is described. FIG. 1 is a schematic diagram of a system architecture of a content sharing system according to an embodiment of this application.

The content sharing system may include a plurality of terminal devices. The terminal device may each be a portable electronic device, for example, a mobile phone, a tablet computer, a laptop computer, or an intelligent wearable device, or may each be a non-portable electronic device, for example, a desktop computer, a smart television, a large-screen device, an in-vehicle terminal, a printer, or a sound box. In FIG. 1, an example in which the content sharing system includes a mobile phone 100, a laptop computer 200, a tablet computer 300, a large-screen device 400, an intelligent wearable device 500, and a sound box 600 is used for description.

Each terminal device may have one or more near field wireless communication modules such as a Bluetooth module, a wireless local area network (wireless local area network, WLAN) (for example, a wireless fidelity (wireless fidelity, Wi-Fi) network) module, a millimeter wave (millimeter wave, mmWave) module, an ultra-wideband (ultra-wideband, UWB) module, or a near field communication (near field communication, NFC) module. The Bluetooth module may include a classic Bluetooth (Bluetooth, BT) module and a Bluetooth low energy (Bluetooth low energy, BLE) module.

The terminal device may detect and scan a terminal device near the terminal device (referred to as a nearby device for short below) by transmitting a signal by using the near field wireless communication module, so that the terminal device can discover a nearby device, establish a wireless communication connection to the nearby device, and perform a content sharing operation, for example, file sharing, audio and video continuation, cross-device editing, or wireless projection with the nearby device based on the established wireless communication connection.

The mobile phone 100 and the laptop computer 200 are used as an example to describe several content sharing manners.

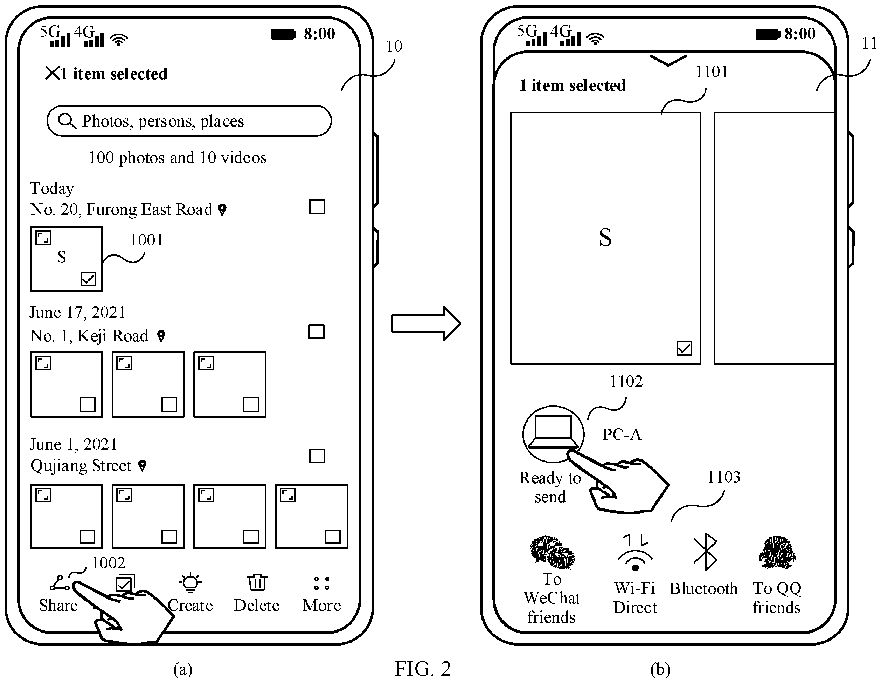

A user may share content through a share button in an interface of an application (application, APP). Specifically, after Wi-Fi is enabled on both the mobile phone 100 and the laptop computer 200, as shown in (a) in FIG. 2, the user may open a target APP (for example, a "Gallery" APP herein) on the mobile phone 100, select, in an interface 10 of "Gallery", a thumbnail 1001 corresponding to a picture S to be shared, and tap a share button 1002 to open a sharing interface. As shown in (b) in FIG. 2, a picture 1101 selected by the user, an icon 1102 corresponding to a nearby device discovered by the mobile phone 100, and some function icons 1103 supporting a sharing service may be displayed in the sharing interface 11. For example, in FIG. 2, the nearby device is "PC-A", and the function icons 1103 include an icon of WeChat, an icon of Bluetooth, an icon of QQ, and an icon for a wireless local area network (wireless local area network, WLAN) direct connection. Then, the user may select the icon 1102 corresponding to the laptop computer 200 "PC-A" found by the mobile phone 100 through a search to establish a connection. After the connection is established, the mobile phone 100 may transmit the picture S to be shared to the laptop computer 200 "PC-A".

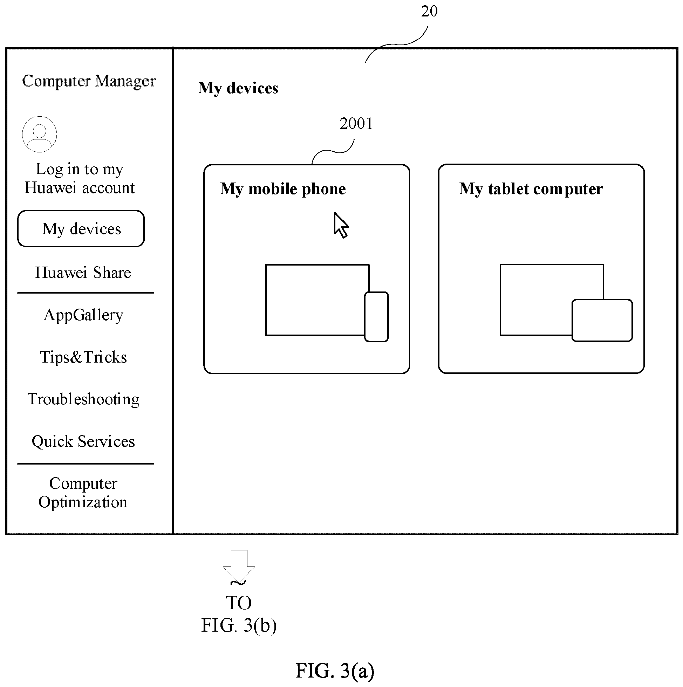

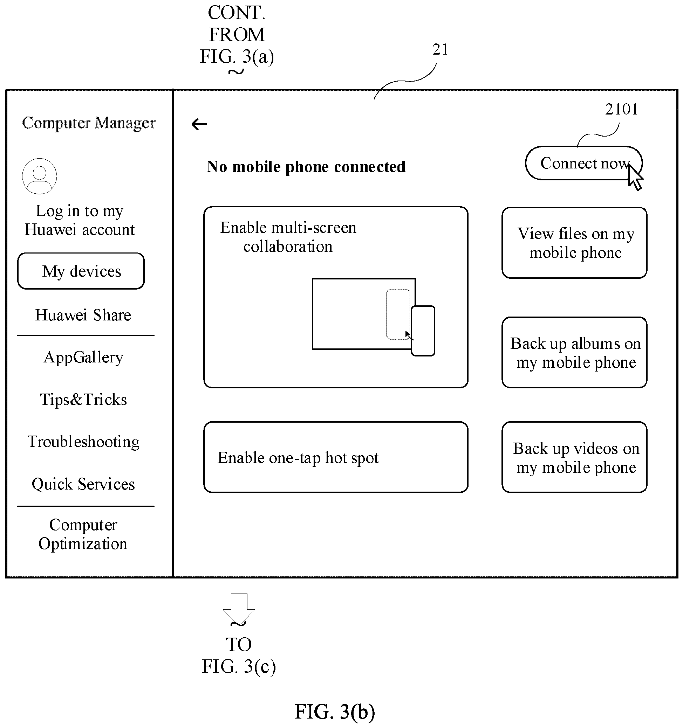

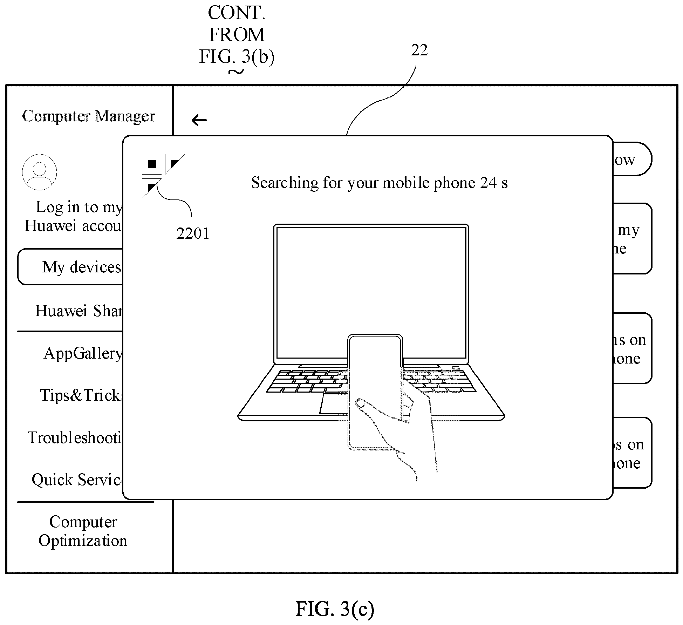

The user may alternatively share content through projection. For an implementation, refer to FIG. 3(a) to FIG. 3(c). As shown in FIG. 3(a), after the user first starts a computer manager on the laptop computer 200, the user selects an option 2001 for "My mobile phone 100" in an interface 20 of "My devices", to open an interface for managing the mobile phone 100. As shown in FIG. 3(b), the user may tap an option 2101 "Connect now" in the interface 21 for managing the mobile phone 100, to open an interface for connecting the mobile phone 100 for a connection to the mobile phone 100. As shown in FIG. 3(c), prompt information "Searching for your mobile phone 100" and a search countdown "24 s" may be displayed in the interface 22 for connecting the mobile phone 100; and a two-dimensional barcode connection entry 2201 may be provided in an upper left corner. The user may enable Bluetooth on both the mobile phone 100 and the laptop computer 200, so that the laptop computer 200 can discover the mobile phone 100 and automatically establish a connection; or may enable Wi-Fi on both the mobile phone 100 and the laptop computer 200, tap the two-dimensional barcode connection entry 2201 in the upper left corner in the interface 22 for connecting the mobile phone 100, open a two-dimensional barcode connection interface, and then scan a two-dimensional barcode in the two-dimensional barcode connection interface by using the mobile phone 100 to establish a connection. After the connection is established, the laptop computer 200 may display a screen mirrored from the mobile phone 100. The user may view and edit, on the laptop computer 200, a file stored on the mobile phone 100, and may further transfer a file to or receive a file from the mobile phone 100 by dragging.

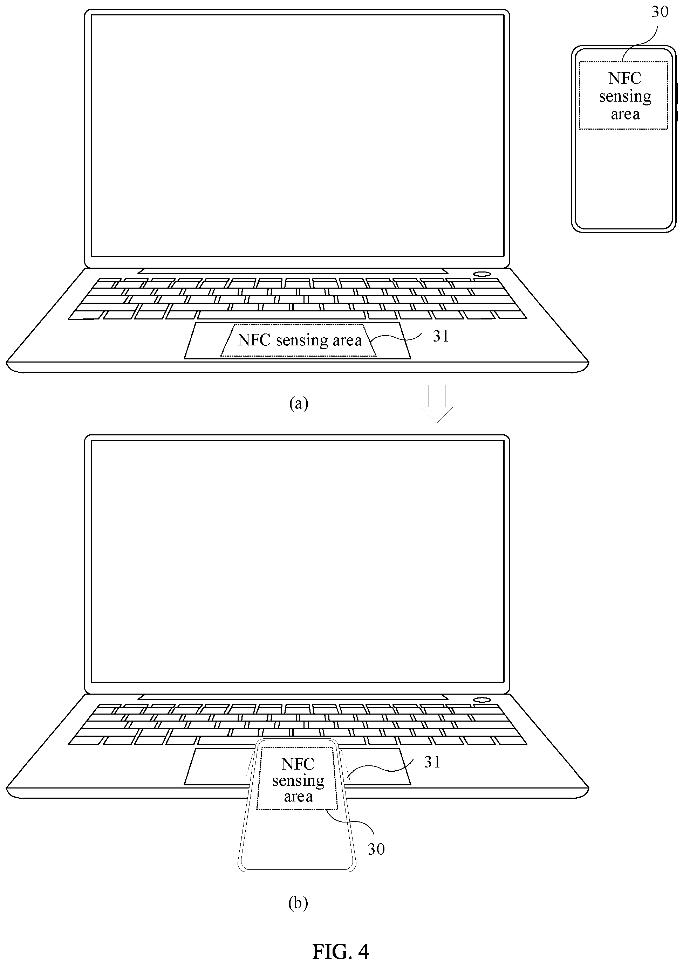

For another implementation in which a user shares content through projection, refer to FIG. 4. After the user enables Wi-Fi and Bluetooth on both the mobile phone 100 and the laptop computer 200 and enables NFC on the mobile phone 100, as shown in (a) and (b) in FIG. 4, the user may use an NFC sensing area 30 on the back of the mobile phone 100 to touch an NFC tag sensing area 31 of the laptop computer 200 to establish a connection, to implement projection from the mobile phone 100 to the laptop computer 200.

In the foregoing several content sharing manners, in the manner of sharing content by establishing a connection by using the share button shown in FIG. 2 and the manner of sharing content by establishing a connection by using a two-dimensional barcode shown in FIG. 3(a) to FIG. 3(c), a user needs to perform a plurality of operations in interfaces displayed on terminal devices to implement connections and content sharing among the terminal devices. The operations are cumbersome. In the manner of sharing content by establishing a connection through NFC shown in FIG. 4, an NFC chip or a peripheral NFC tag needs to be built in a terminal device. However, for some terminal devices such as tablet computers, it is difficult to arrange an NFC tag due to a product form, and costs of a built-in NFC chip are high. Moreover, the NFC chip is used in a very few application scenarios, and has low functionality.

In view of the foregoing problems, an embodiment of this application provides another content sharing solution, so that a user can quickly implement content sharing between two devices by moving a terminal device close to a nearby device and tilting the terminal device, without relying on an NFC chip. The terminal device tilted by the user may be a portable electronic device, and the nearby device may be a portable or non-portable electronic device.

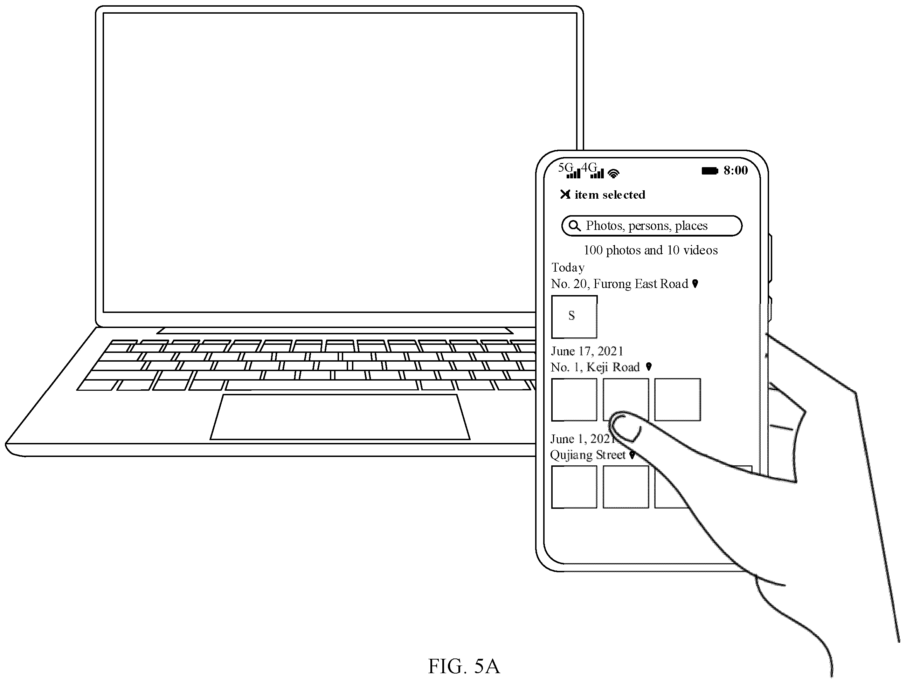

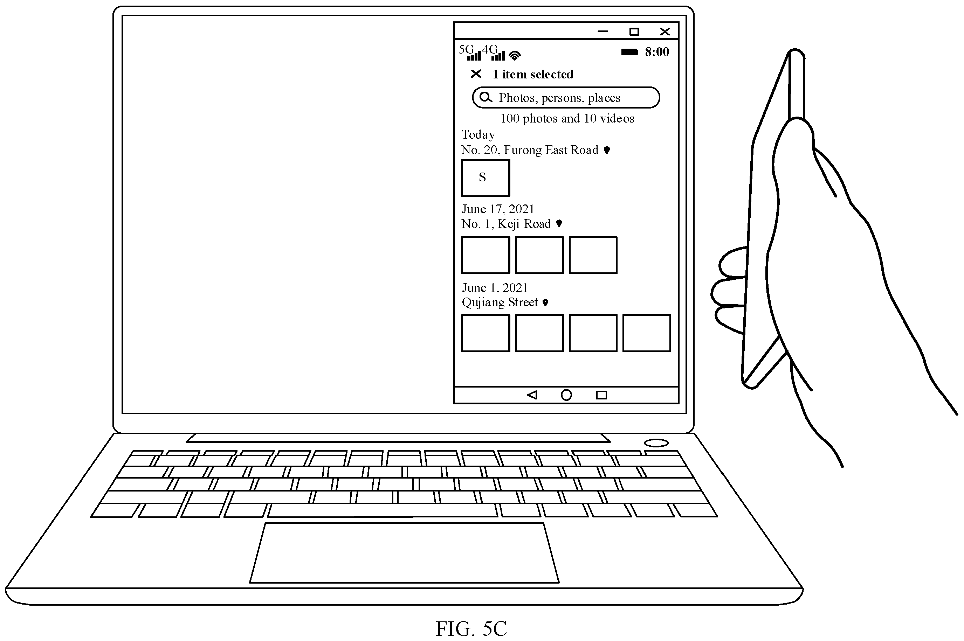

For example, as shown in FIG. 5A to FIG. 5C, the user may hold the mobile phone 100 close to the laptop computer 200 and tilt the mobile phone 100 to share content on the mobile phone 100 (for example, a mirror of content on a screen of the mobile phone 100 herein) to the laptop computer 200. Alternatively, the user may tilt the mobile phone 100 when holding the mobile phone 100 and approaching the laptop computer 200, to share content on the mobile phone 100 to the laptop computer 200.

A specific implementation process of the foregoing content sharing solution is described below with reference to a specific application scenario.

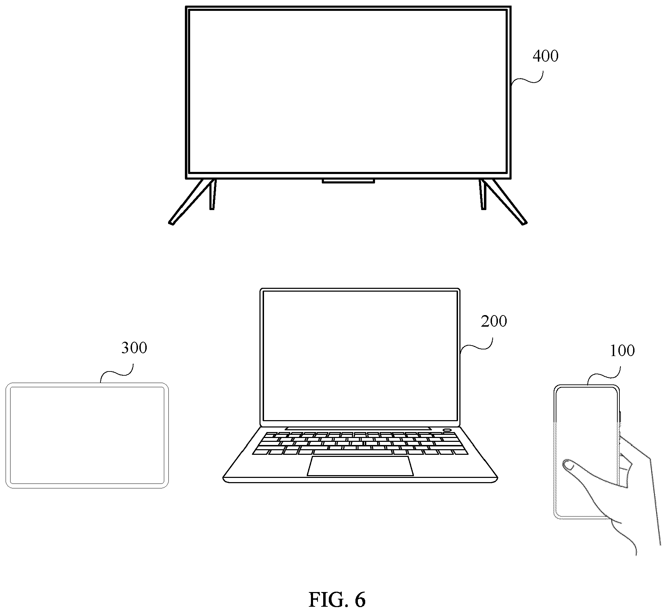

FIG. 6 is a schematic diagram of an application scenario according to an embodiment of this application. As shown in FIG. 6, the application scenario includes a mobile phone 100, a laptop computer 200, a tablet computer 300, and a large-screen device 400. For example, the mobile phone 100, the laptop computer 200, and the tablet computer 300 are in front of the large-screen device 400, the mobile phone 100 is on a right side of the laptop computer 200, and the tablet computer 300 is on a left side of the laptop computer 200. The user may move the mobile phone 100 close to the laptop computer 200, to share content with the laptop computer 200 by tilting the mobile phone 100.

It can be understood that the foregoing application scenario is merely an example, and is not intended to limit this application. In some other embodiments of this application, the application scenario may include more or fewer terminal devices than those shown in the figure, or include a terminal device of another type. In addition, a user may implement content sharing between any two terminal devices in the foregoing manner of approaching and tilting.

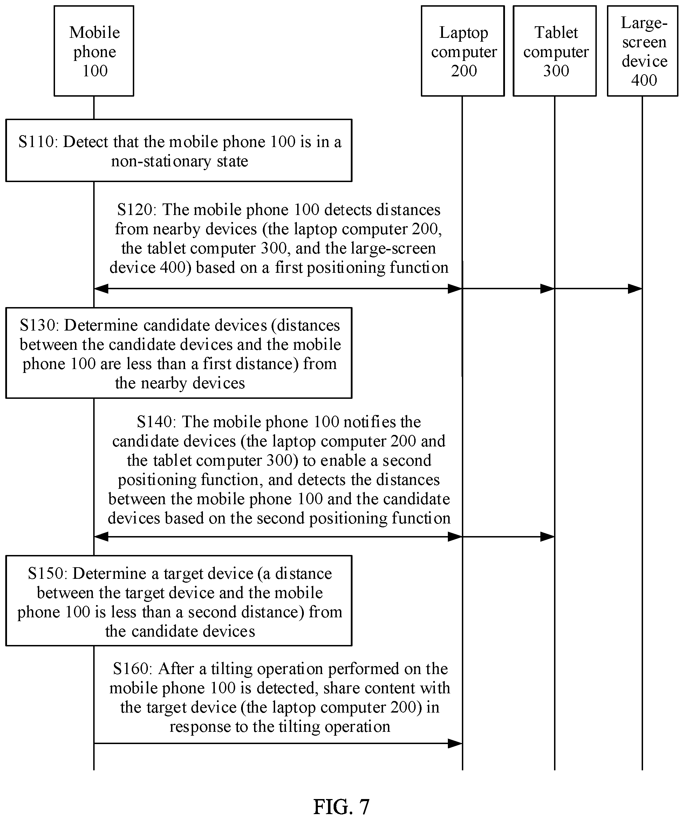

FIG. 7 shows a possible implementation process in which a user picks up the mobile phone 100 to share content with the laptop computer 200. As shown in FIG. 7, the process may include the following steps.

S110: The mobile phone 100 detects that the mobile phone 100 is in a non-stationary state.

As shown in FIG. 6, the laptop computer 200, the tablet computer 300, and the large-screen device 400 are all near the mobile phone 100. The user may move the mobile phone 100 close to the laptop computer 200 in the nearby devices, so that the mobile phone 100 may determine that the laptop computer 200 that is closer to the mobile phone 100 is a target device with which content is to be shared, for content sharing.

Specifically, the mobile phone 100 may detect, by using a distance measurement function in any working state, whether the mobile phone 100 is close enough to the laptop computer 200. As distance measurement requires specific energy consumption, and the mobile phone 100 is in the non-stationary state when the user holds the mobile phone 100 and approaches the laptop computer 200, to save power, in this embodiment, the mobile phone 100 may first detect a motion status of the mobile phone 100, and then perform a distance measurement process when detecting that the mobile phone 100 is in the non-stationary state.

When the user holds the mobile phone 100 and approaches the laptop computer 200, the mobile phone 100 moves toward the laptop computer 200. To further save power, in this embodiment, the mobile phone 100 may perform a distance measurement process when detecting that the mobile phone 100 is moving toward a direction (that is, is in a moving state).

In a specific implementation, the mobile phone 100 may identify the motion status of the mobile phone 100 by using a signal detected by a motion sensor. The motion sensor may include one or more sensors such as an accelerometer (accelerometer, ACC) sensor, a gyroscope, and an inertial measurement unit (inertial measurement unit, IMU).

S120: The mobile phone 100 detects distances from the nearby devices (the laptop computer 200, the tablet computer 300, and the large-screen device 400) based on a first positioning function.

Compared with a low-precision positioning function, a high-precision positioning function usually requires higher power consumption. Therefore, to save power, in this embodiment, the mobile phone 100 may first detect the distances from the nearby devices by using a low-precision positioning function (referred to as the first positioning function herein), select some candidate devices, and then detect distances from the candidate devices by using a high-precision positioning function (referred to as a second positioning function herein), to select the target device.

It can be understood that, when detecting the target device, the mobile phone 100 may alternatively directly determine the distances from the nearby devices by using the second positioning function with higher precision, to simplify a processing procedure. In this embodiment, an example in which the first positioning function is used before the second positioning function is used is used for description.

The first positioning function may include a Bluetooth positioning function, a Wi-Fi positioning function, and the like. The second positioning function may include an ultrasonic positioning function, a millimeter wave positioning function, an ultra-wideband positioning function, and the like.

When the first positioning function is used for distance measurement, the mobile phone 100 may measure the distances between the mobile phone 100 and the nearby devices by using one type of first positioning functions, or may measure the distances between the mobile phone 100 and the nearby devices by combining a plurality of types of first positioning functions. Similarly, when the second positioning function is subsequently used for distance measurement, the mobile phone 100 may also measure the distances between the mobile phone 100 and the candidate devices by using one or more types of second positioning functions.

The mobile phone 100 and the nearby devices may receive and transmit a positioning signal by using the first positioning function, for example, transmit and receive a Bluetooth signal (that may be specifically a broadcast signal or a response signal) by using the Bluetooth positioning function. The mobile phone 100 may determine a distance between the mobile phone 100 and a discovered nearby device based on a value of a received signal strength indicator (received signal strength indicator, RSSI) of the positioning signal. The mobile phone 100 may alternatively use another distance measurement method, for example, a time of arrival (time of arrival, TOA) distance measurement method, a time difference of arrival (time difference of arrival, TDOA) distance measurement method, an angle of arrival (angle of arrival, AOA) distance measurement method, or a time of flight (time of flight, TOF) distance measurement method, to determine the distance between the mobile phone 100 and the discovered nearby device. This is not particularly limited in this embodiment of this application.

S130: The mobile phone 100 determines candidate devices from the nearby devices. Distances between the candidate devices and the mobile phone 100 are less than a first distance.

After determining the distances from the nearby devices, the mobile phone 100 may select the candidate devices based on a distance threshold (referred to as the first distance herein). The first distance may be determined based on positioning precision of the first positioning function, and may be greater than or equal to the positioning precision of the first positioning function. For example, when the distances between the mobile phone 100 and the nearby devices are determined by using a Bluetooth positioning technology, as positioning precision of Bluetooth positioning is around 30 cm, the first distance may be 50 cm. In actual application, a specific value of the first distance may be set based on an actual requirement, and this is not particularly limited in this embodiment.

It is assumed that a distance between the laptop computer 200 and the mobile phone 100 is 10 cm, a distance between the tablet computer 300 and the mobile phone 100 is 40 cm, a distance between the large-screen device 400 and the mobile phone 100 is 1 m, and the first distance is 50 cm. In this case, the mobile phone 100 may determine, by using the first positioning function, that the distance between the laptop computer 200 and the mobile phone 100 and the distance between the tablet computer 300 and the mobile phone 100 are both less than the first distance and that the distance between the large-screen device 400 and the mobile phone 100 is greater than the first distance. Therefore, it may be determined that the laptop computer 200 and the tablet computer 300 are candidate devices.

S140: The mobile phone 100 notifies the candidate devices (the laptop computer 200 and the tablet computer 300) to enable the second positioning function, and detects the distances from the candidate devices based on the second positioning function. The distances between the candidate devices and the mobile phone 100 are less than the first distance.

After determining the candidate devices, the mobile phone 100 may notify the candidate devices to enable the second positioning function, to perform a higher-precision distance measurement. For example, after determining that the laptop computer 200 and the tablet computer 300 are candidate devices, the mobile phone 100 may notify the laptop computer 200 and the tablet computer 300 to enable the ultrasonic positioning function, and then measure, by using the function, a distance between the mobile phone 100 and the laptop computer 200 and a distance between the mobile phone 100 and the tablet computer 300.

A specific distance measurement method is similar to the distance measurement manner in which the first positioning function is used in step S 130. The mobile phone 100 and the candidate devices may receive and transmit a positioning signal by using the second positioning function. The mobile phone 100 may determine the distances between the mobile phone 100 and the candidate devices based on a value of an RSSI of the positioning signal, or determine the distances between the mobile phone 100 and the candidate devices by using a distance measurement method based on, for example, a TOA/a TDOA/an AOA/a TOF.

In some embodiments, the mobile phone 100 may alternatively indicate, by using a positioning signal, the candidate devices to measure the distances between the candidate devices and the mobile phone 100, and then return measurement results to the mobile phone 100. In other words, a process of measuring the distances between the mobile phone 100 and the candidate devices by using the second positioning function may alternatively be performed on the candidate devices. The mobile phone 100 may obtain the distances between the mobile phone 100 and the candidate devices from the candidate devices. Similarly, a process of measuring the distances between the mobile phone 100 and the nearby devices by using the first positioning function may alternatively be performed on the nearby devices, and the mobile phone 100 may alternatively obtain the distances between the mobile phone 100 and the nearby devices from the nearby devices.

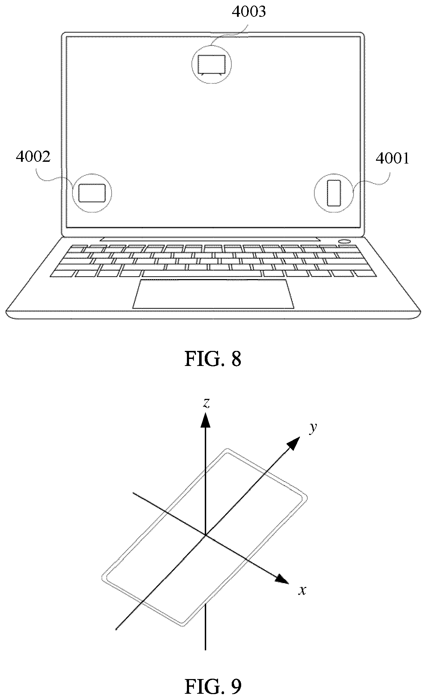

If the second positioning function is enabled on all terminal devices including the mobile phone 100 and the candidate devices, the terminal devices may discover each other by using a positioning signal. After receiving a second positioning function enabling notification sent by the mobile phone 100, when another terminal device other than the candidate devices is discovered by using the second positioning function, the candidate devices may display a device identifier of the discovered terminal device on screens, so that a user can learn a working status of the device. For example, as shown in FIG. 8, the laptop computer 200 may discover the mobile phone 100, the tablet computer 300, and the large-screen device 400 by using the second positioning function, and therefore may display device identifiers of the three devices on the screen.

The device identifiers may each include a device type, a device name, and/or the like of the terminal devices, and the device identifiers may be displayed in a form of icons, cards, or the like. In FIG. 8, an example in which the device type is displayed in the form of an icon is used for description. As shown in FIG. 8, the mobile phone 100 corresponds to an icon 4001, the tablet computer 300 corresponds to an icon 4002, and the large-screen device 400 corresponds to an icon 4003.

To help a user learn a position relationship among the devices, as shown in FIG. 8, when displaying an icon corresponding to a device identifier, the candidate devices may further indicate, through positions of icons on the screens, the position relationship among the terminal devices corresponding to the icons and the candidate devices. For example, in FIG. 6, the mobile phone 100 is on the right side of the laptop computer 200, the tablet computer 300 is on the left side of the laptop computer 200, and the large-screen device 400 is behind a screen of the laptop computer 200. Correspondingly, as shown in FIG. 8, the icon 4001 corresponding to the mobile phone 100 may be displayed in a lower right corner or another position on the right side of the screen of the laptop computer 200, the icon 4002 corresponding to the tablet computer 300 may be displayed in a lower left corner or another position on the left side of the screen of the laptop computer 200, and the icon 4003 corresponding to the large-screen device 400 may be displayed on the top of the screen of the laptop computer 200.

It can be understood that the foregoing position relationship indication manner is merely an example. In this embodiment of this application, another manner of indicating a position relationship between terminal devices may be used. For example, a position relationship between a terminal device corresponding to an icon and a candidate device may be described with text below the icon. Positioning information of the terminal device displayed on the candidate device is not limited to the device identifier and the position relationship. For example, a positioning manner (for example, Bluetooth) used to discover the terminal device may be further displayed. In a specific implementation, any selection may be performed based on a requirement, and this is not particularly limited in this embodiment.

In some embodiments, the mobile phone 100 may further display positioning information of another terminal device discovered by using the second positioning function, or the candidate device may display only positioning information of a terminal device (that is, the mobile phone 100) that sends the second positioning function enabling notification.

In some embodiments, when discovering a nearby device by using the first positioning function, each terminal device may further display positioning information of the discovered nearby device on a screen.

S150: The mobile phone 100 determines the target device from the candidate devices. A distance between the target device and the mobile phone 100 is less than a second distance.

Similar to step S130, after determining the distances from the candidate devices by using the second positioning function, the mobile phone 100 may determine the target device based on a distance threshold (referred to as the second distance herein). The second distance may be greater than or equal to positioning precision of the second positioning function. For example, when the distances between the mobile phone 100 and the candidate devices are determined by using an ultrasonic positioning technology, as positioning precision of ultrasonic positioning is around 20 cm, the second distance may be 25 cm. In actual application, a specific value of the second distance may be set based on an actual requirement, and this is not particularly limited in this embodiment.

The foregoing example is still used. It is assumed that the distance between the laptop computer 200 and the mobile phone 100 is 10 cm, the distance between the tablet computer 300 and the mobile phone 100 is 40 cm, the distance between the large-screen device 400 and the mobile phone 100 is 1 m, the first distance is 50 cm, and the second distance is 25 cm. In this case, after determining, by using the first positioning function, that the laptop computer 200 and the tablet computer 300 are candidate devices, the mobile phone 100 may continue to determine, by using the second positioning function, that the distance between the laptop computer 200 and the mobile phone 100 is less than the second distance and that the distance between the tablet computer 300 and the mobile phone 100 is greater than the second distance. Therefore, it may be determined that the laptop computer 200 is the target device.

S 160: After detecting a tilting operation performed on the mobile phone 100, the mobile phone 100 shares content with the target device (the laptop computer 200) in response to the tilting operation.

To more accurately determine an object with which content is to be shared, in addition to determining the target device, the mobile phone 100 may further detect a tilting operation performed by a user on the mobile phone 100. When the target device is determined and the tilting operation is detected, the mobile phone 100 may share content with the target device.

Similar to determining the target device, the mobile phone 100 may detect the tilting operation in any working state, or may detect the tilting operation when it is detected that the mobile phone 100 is in a non-stationary state or a moving state, to save power.

The tilting operation may be tilting the mobile phone 100 toward any side, or may be a tilting operation that satisfies a specific requirement, to reduce cases of false detection. For example, the tilting operation may be rotating a terminal device in a state with a screen facing up around a target rotation axis by a first angle. The target rotation axis may be an axis along a length or width direction of the terminal device. Specifically, the mobile phone 100 may consider that the tilting operation is detected when detecting the following process:
(1) The mobile phone 100 is initially in the state with the screen facing up, that is, a normal direction of the screen of the mobile phone 100 is facing up.

FIG. 9 is a schematic diagram of a coordinate system of a terminal device according to an embodiment of this application. As shown in FIG. 9, an x-axis and a y-axis are parallel to a plane on which the screen of the mobile phone 100 is located. The x-axis is a width direction of the mobile phone 100, and the y-axis is a length direction of the mobile phone 100. A z-axis is perpendicular to the plane on which the screen of the mobile phone 100 is located, and the z-axis is the normal direction of the screen of the mobile phone 100.

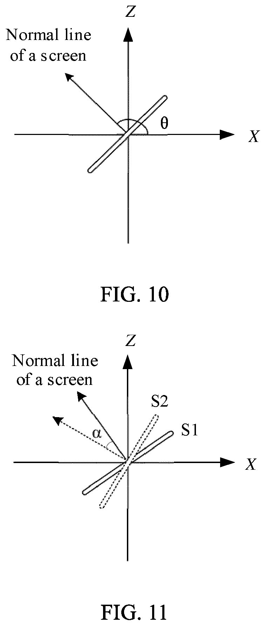

When the mobile phone 100 is in the state with the screen facing up, a normal line of the screen of the mobile phone 100 may be perpendicular to a horizontal plane, or there may be a tilt angle between the normal line and the horizontal plane. FIG. 10 is a schematic diagram of a tilt angle in a normal direction of a screen of a terminal device according to an embodiment of this application. As shown in FIG. 10, Z represents a vertical direction, and X represents a horizontal direction. There may be an included angle θ between the normal direction of the screen of the mobile phone 100 and any horizontal direction, and a range of the included angle θ may be (0°, 180°).

An initial posture of the mobile phone 100 may be a portrait-mode state, or may be a landscape-mode state.

An initial device state, for example, the state with the screen facing up, for the tilting operation is set, so that cases of incorrectly triggering the tilting operation can be reduced, and when the terminal device is in the state with the screen facing up, it is convenient for a user to perform an operation.

(2) After the mobile phone 100 is rotated around the target rotation axis by the first angle within a first time length, the mobile phone 100 stays stationary for a second time length.

The target rotation axis may be the x-axis or the y-axis of the mobile phone 100. As shown in FIG. 11, an X-axis represents a horizontal direction, and a Z-axis represents a vertical direction. It is assumed that the y-axis of the mobile phone 100 is perpendicular to the X-axis and the Z-axis, the mobile phone 100 is rotated around the y-axis and is flipped from a first state S1 to a second state S2. An angle of rotation α in the normal direction of the screen of the mobile phone 100 is the first angle.

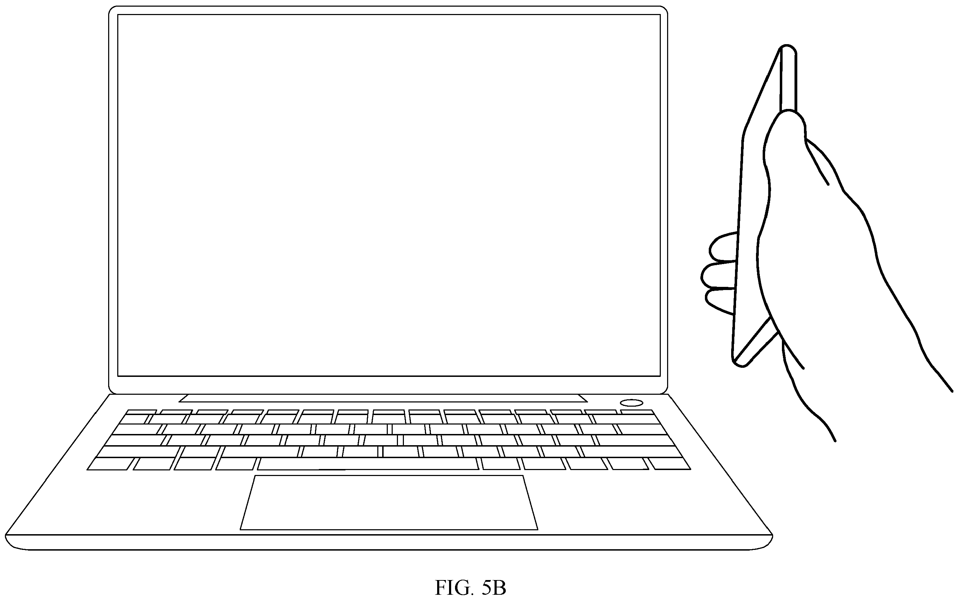

For example, as shown in FIG. 5B, when the mobile phone 100 is in the portrait-mode state, after holding the mobile phone 100 and approaching the laptop computer 200, a user may rotate the mobile phone 100 around the y-axis (that is, the length direction) of the mobile phone 100, to complete the tilting operation.

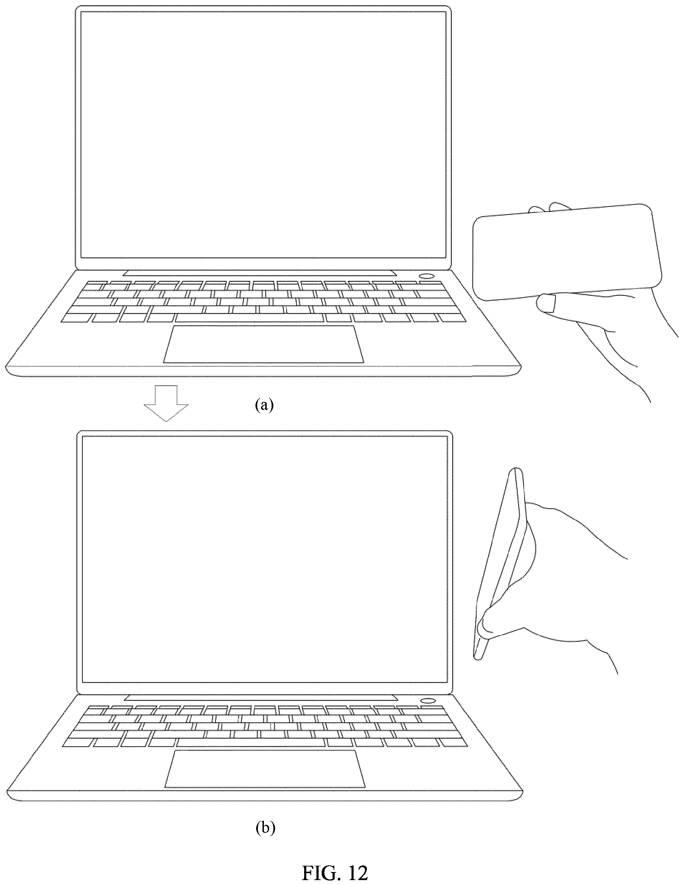

For another example, as shown in (a) and (b) in FIG. 12, when the mobile phone 100 is in the landscape-mode state, after holding the mobile phone 100 and approaching the laptop computer 200, a user may rotate the mobile phone 100 around the x-axis (that is, the width direction) of the mobile phone 100, to complete the tilting operation.

Specifically, the first time length may be a short time length, for example, 1 second or 2 seconds. A slightly large angle range (referred to as a first angle range below) may be selected for the first angle, to reduce cases of false detection. For example, the first angle range may be [15°, 105°]. In other words, a lower limit of the first angle may be 15°, and an upper limit of the first angle may be 105°. The second time length is similar to the first time length, and a short time length, for example, 1 second or 2 seconds, may be selected. Specific values of the first time length, the first angle, and the second time length may all be selected based on an actual requirement. This is not particularly limited in this embodiment.

It can be understood that, in some embodiments, when it is detected that the mobile phone 100 is rotated around the target rotation axis by the first angle, it may be considered that the tilting operation is detected, to improve a detection speed. In the foregoing process of detecting the tilting operation, the first time length and the second time length are considered, so that cases of incorrectly triggering the tilting operation can be reduced, and accuracy of a detection result can be improved.

To further improve the accuracy of the detection result, in this embodiment, an angular acceleration when the mobile phone 100 is rotated (that is, a rotational angular acceleration) may further be detected. When the mobile phone 100 satisfies the states corresponding to (1) and (2), and the rotational angular acceleration is greater than or equal to a first angular acceleration, it is considered that the tilting operation is detected.

In a process in which a user performs the tilting operation, there may be a case in which the user fails to tilt for the first time. For example, the mobile phone 100 satisfies the state corresponding to (1), but satisfies only a part of the state corresponding to (2), for example, after the mobile phone 100 is rotated around the target rotation axis by the first angle within the first time length, a time length within which the mobile phone 100 stays stationary does not reach the second time length, an angle by which the mobile phone 100 is rotated around the target rotation axis within the first time length is beyond the first angle range, or in a process of rotating the mobile phone 100 around the target rotation axis by the first angle, the rotational angular acceleration is less than the first angular acceleration. In this case, the user may tilt the mobile phone 100 again. Therefore, to bring greater convenience for the user, the mobile phone 100 may continue to detect a status of the mobile phone 100. If it is detected, within a third time length, that the mobile phone 100 continues to be rotated around the target rotation axis by a second angle and then stays stationary for a fourth time length and that the rotational angular acceleration is greater than or equal to a second angular acceleration, it may further be considered that the tilting operation is detected.

It can be understood that, in the foregoing two consecutive operations of rotating the mobile phone 100, a rotation parameter considered for detecting the operation of rotating the mobile phone 100 for the second time (referred to as a second operation for short) may be determined based on a rotation parameter considered for detecting the operation of rotating the mobile phone 100 for the first time (referred to as a first operation for short). For example, the rotation parameter considered for detecting the first operation includes a time length within which the mobile phone 100 stays stationary (that is, the first time length). Correspondingly, a time length within which the mobile phone 100 stays stationary (that is, the fourth time length) may also be considered for detecting the second operation. The rotation parameter considered for detecting the first operation does not include the rotational angular acceleration. Correspondingly, the rotational angular acceleration may not be considered for detecting the second operation.

In addition, a condition (referred to as a second condition herein) that needs to be satisfied when the second operation is successful in tilting may also be determined based on a condition (referred to as a first condition herein) that needs to be satisfied when the first operation is successful in tilting. Specifically, the third time length may be less than the first time length, and the fourth time length may be less than the second time length. A lower limit of the second angle may be less than or equal to the lower limit of the first angle, and an upper limit of the second angle may be less than or equal to the upper limit of the first angle. For example, an angle range of the second angle (a second angle range for short) may be within a range of [15°, 90°]. The second angular acceleration may be the same as or may be different from the first angular acceleration.

After detecting the target device (for example, the laptop computer 200) and the tilting operation performed on the mobile phone 100, the mobile phone 100 may share content with the target device.

Specifically, the content shared by the mobile phone 100 with the laptop computer 200 may be a file (a picture, a video or audio, a document, or the like), APP running information, projected content, or the like.

For example, as shown in FIG. 5A to FIG. 5C, after a user moves the mobile phone 100 close to the laptop computer 200 and tilts the mobile phone 100, content on the screen of the mobile phone 100 may be projected to the laptop computer 200.

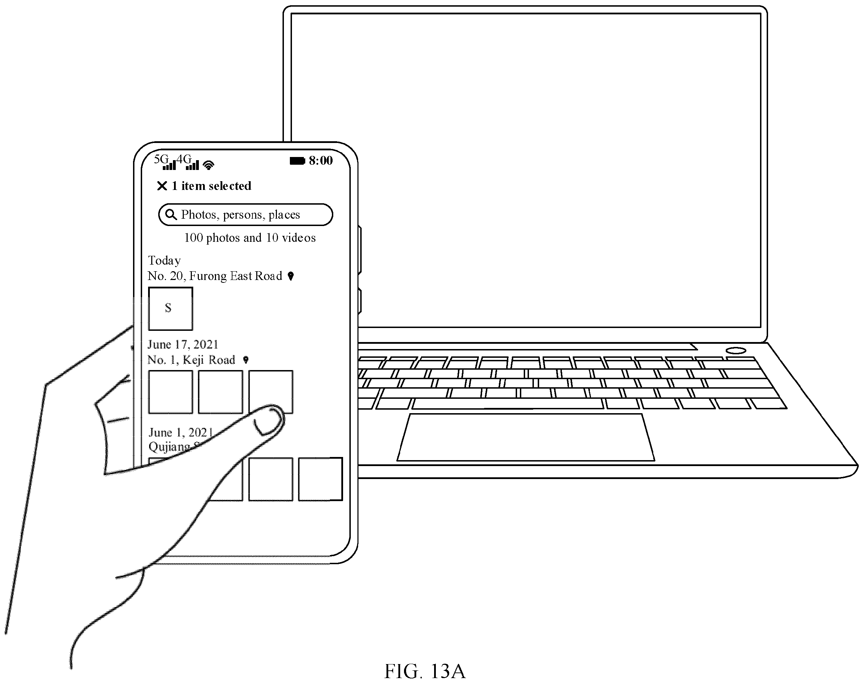

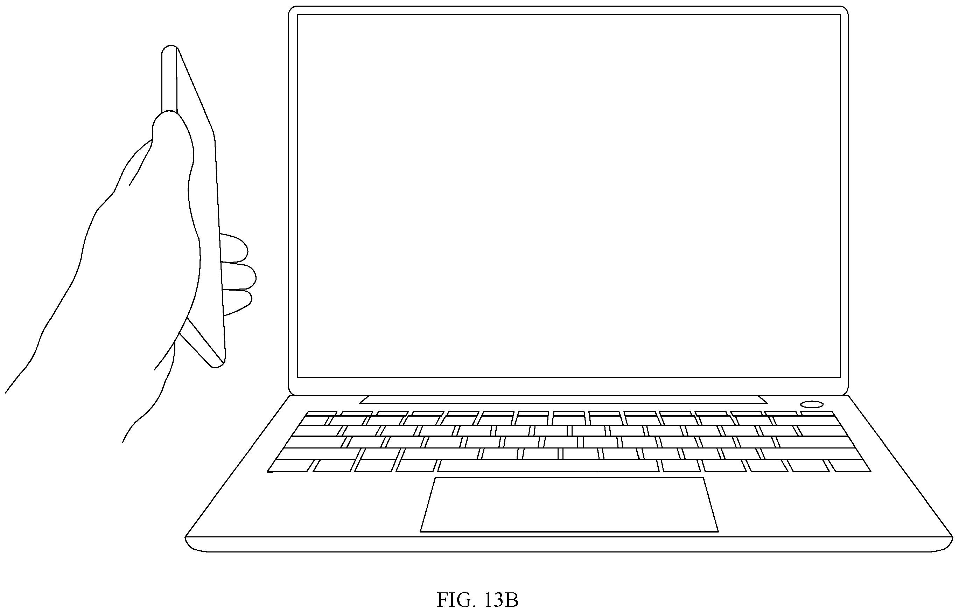

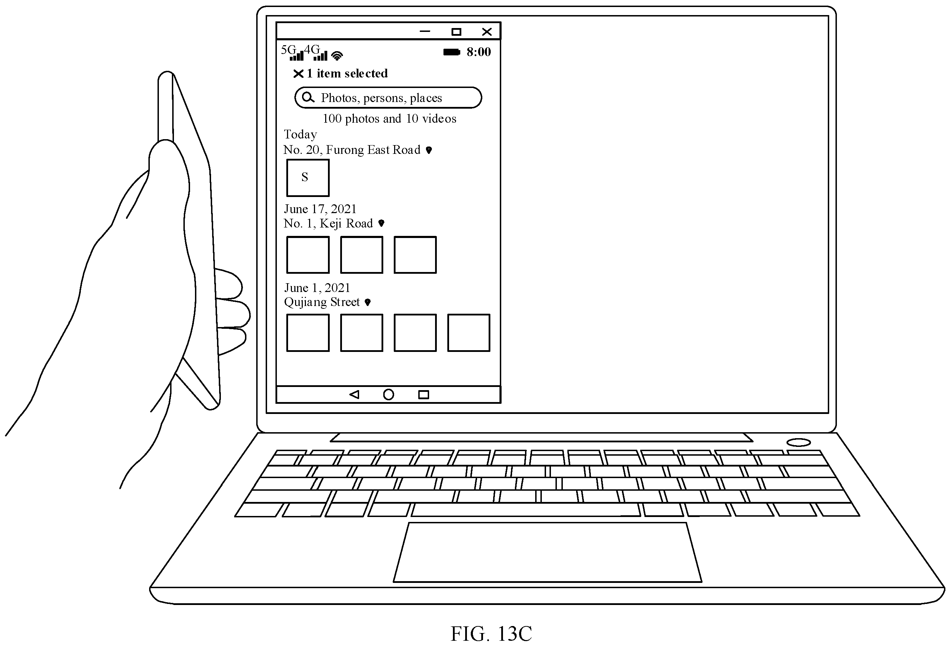

When displaying a projection window, the laptop computer 200 may display the projection window at a preset position by default. Alternatively, in a manner similar to the icon display manner in FIG. 8, a display position of the projection window may be determined based on a position relationship between the mobile phone 100 and the laptop computer 200, and the projection window corresponding to the mobile phone 100 is displayed on a side of a screen closer to the mobile phone 100, to improve user experience. For example, in FIG. 5A to FIG. 5C, the mobile phone 100 is on a right side of the laptop computer 200. After the mobile phone 100 is tilted, the laptop computer 200 may display the projection window corresponding to the mobile phone 100 on a right side of the screen. In FIG. 13A to FIG. 13C, if the mobile phone 100 is on a left side of the laptop computer 200, after the mobile phone 100 is tilted, the laptop computer 200 may display the projection window corresponding to the mobile phone 100 on a left side of the screen. The position relationship between the mobile phone 100 and the laptop computer 200 may be determined by the laptop computer 200 based on the first positioning function or the second positioning function, or may be determined by the mobile phone 100 based on the first positioning function or the second positioning function and then sent to the laptop computer 200 when the mobile phone 100 shares content with the laptop computer 200. After the laptop computer 200 displays the projection window, the user may further drag the projection window to change a position of the projection window on the screen.

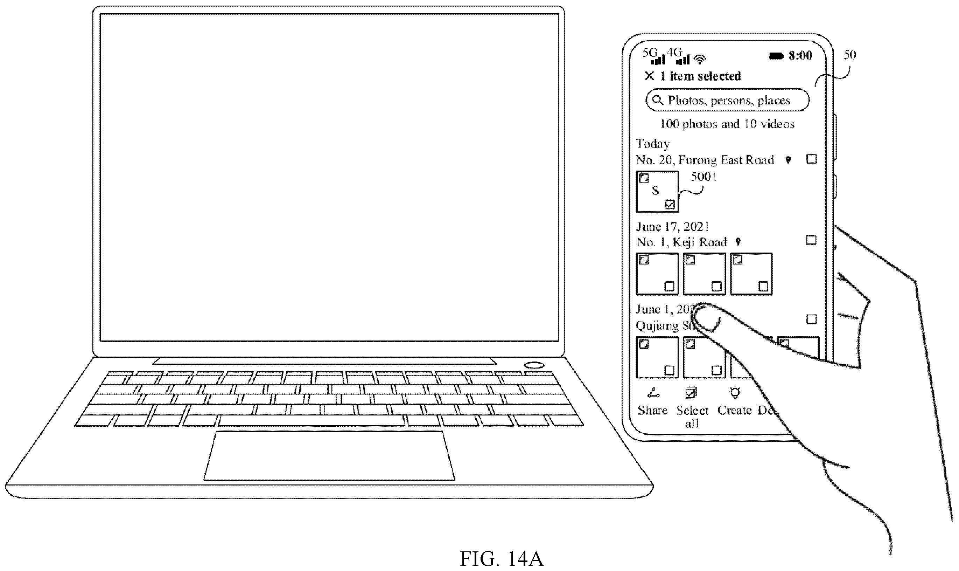

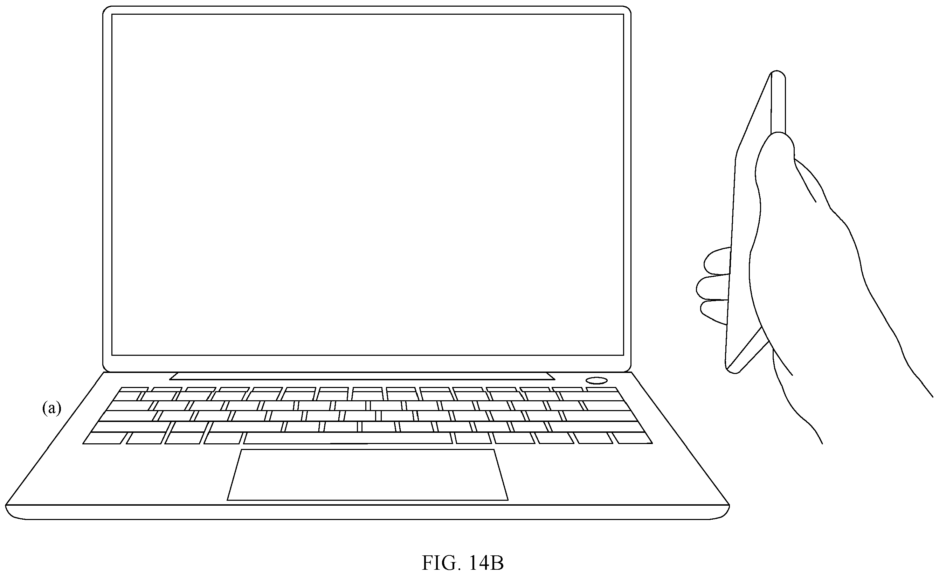

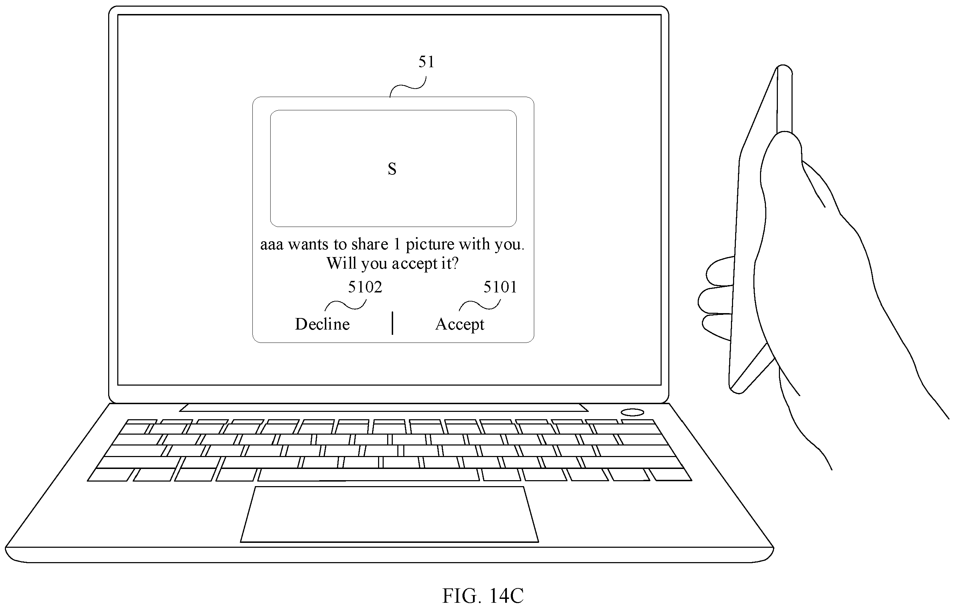

For another example, as shown in FIG. 14A and FIG. 14B, after selecting, in a "Gallery" interface 50, a thumbnail 5001 corresponding to a picture S to be shared, the user moves the mobile phone 100 close to the laptop computer 200, and tilts the mobile phone 100, to share the picture with the laptop computer 200. As shown in FIG. 14C, a dialog box 51 for asking the user whether to receive the picture may be displayed on the laptop computer 200. The user may tap an accept option 5101 in the dialog box 51 to receive the picture S, or tap a decline option 5102 to decline to receive the picture S. "aaa" is a device name of the mobile phone 100.

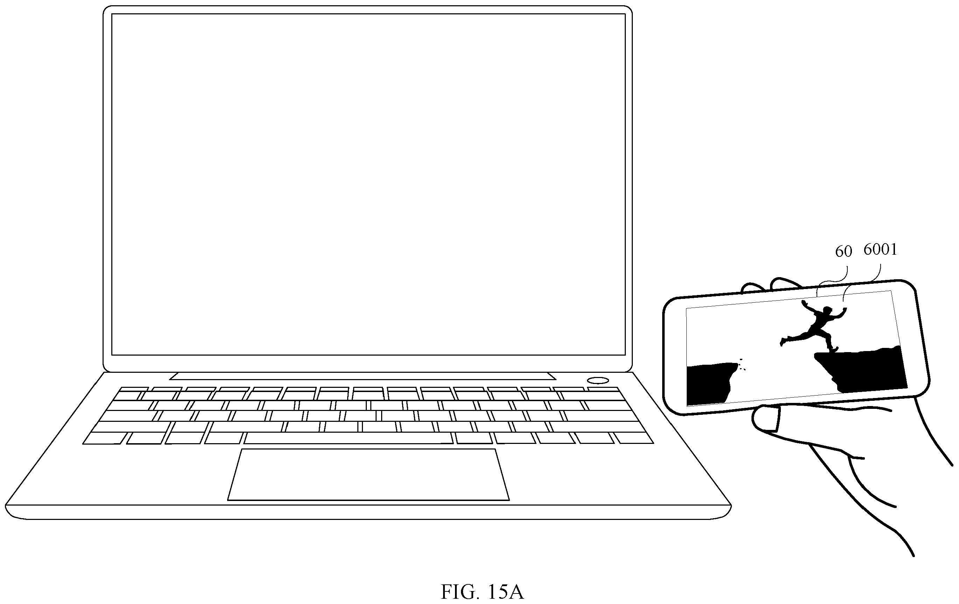

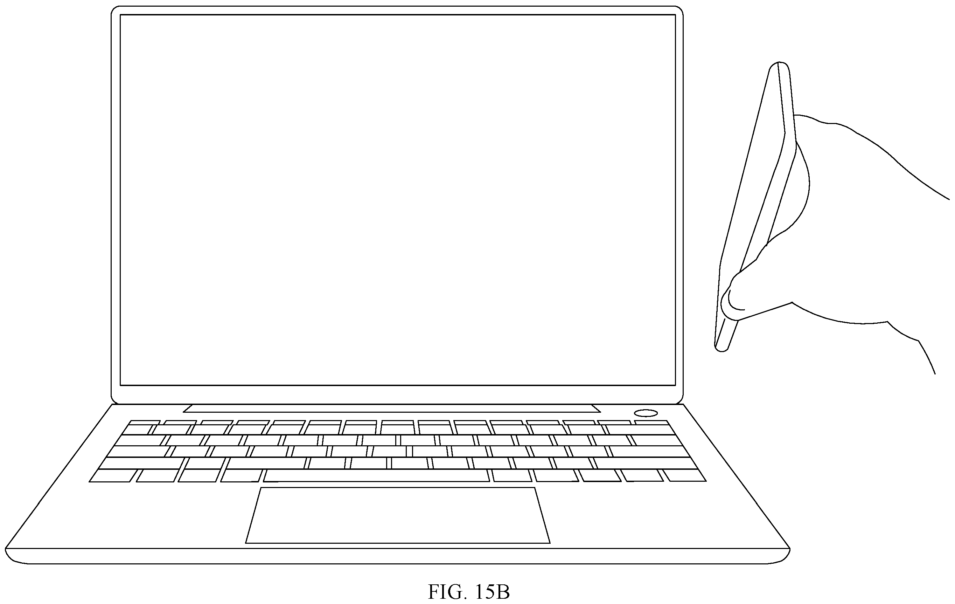

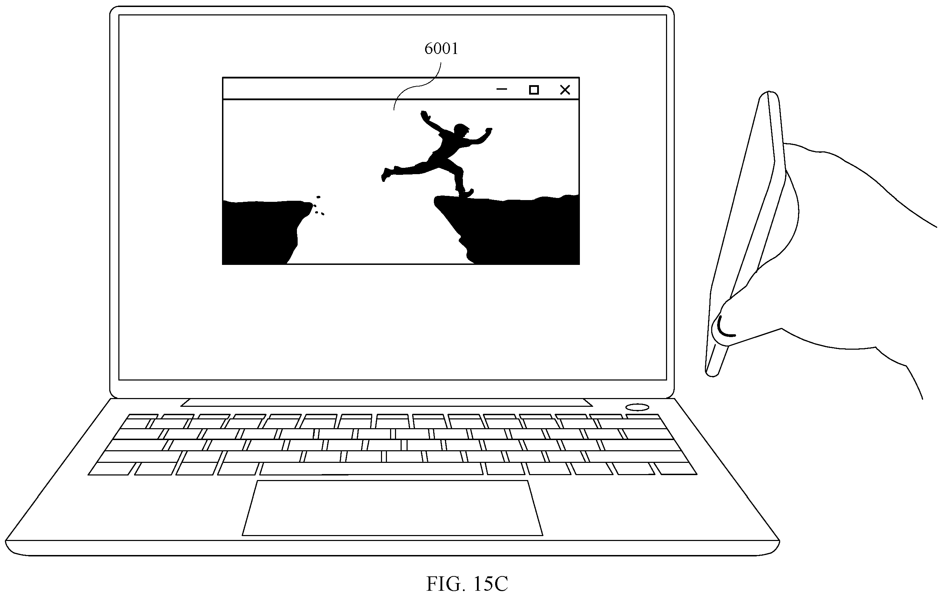

For another example, as shown in FIG. 15A and FIG. 15B, a user plays a video 6001 in a video display interface 60 of a "HUAWEI Video" APP, and after the user moves the mobile phone 100 close to the laptop computer 200 and tilts the mobile phone 100, the user may share running information of the "HUAWEI Video" APP with the laptop computer 200. As shown in FIG. 15C, the "HUAWEI Video" APP may be opened on the laptop computer 200 to continue playing the video 6001.

In this embodiment, there may be a plurality of target devices near the mobile phone 100. In consideration of this case, when content is to be shared, the mobile phone 100 may detect a tilting direction. If the target device and the tilting operation performed on the mobile phone 100 are detected, and the tilting direction of the tilting operation is toward the target device, the mobile phone 100 may share content with the target device.

For example, in the application scenario shown in FIG. 6, if a user holds the mobile phone 100 and approaches the laptop computer 200 and then tilts the mobile phone 100 toward the laptop computer 200, the mobile phone 100 may share content with the laptop computer 200; or if the user holds the mobile phone 100 and approaches the laptop computer 200 and tilts the mobile phone 100 toward the large-screen device 400, the mobile phone 100 does not share content with the laptop computer 200.

For another example, in the application scenario shown in FIG. 6, it is assumed that both the mobile phone 100 and the laptop computer 200 are on a right side of the tablet computer 300, and distances from the laptop computer 200 and the tablet computer 300 are within the second distance after the mobile phone 100 approaches the laptop computer 200. In this case, if the user tilts the mobile phone 100 toward the laptop computer 200, the mobile phone 100 may share content with the laptop computer 200; or if the user tilts the mobile phone 100 toward the tablet computer 300, the mobile phone 100 may share content with the tablet computer 300.

The tilting direction of the tilting operation may be determined based on a process in which the normal direction of the screen of the mobile phone 100 changes in the tilting process. For example, when the mobile phone 100 is tilted toward the laptop computer 200, the normal direction of the screen of the mobile phone 100 rotates toward the laptop computer 200.

In some embodiments, when the tilting operation is toward at least one target device, the mobile phone 100 may share content with each target device or a target device which the tilting operation is toward, to reduce cases of incorrect sharing.

In some embodiments, when there is only one target device, the mobile phone 100 may not consider the tilting direction. When there are a plurality of target devices, the mobile phone 100 considers the tilting direction. To be specific, when there is one detected target device, the mobile phone 100 may share content with the target device regardless of the tilting direction of the tilting operation. When there are a plurality of detected target devices, the mobile phone 100 shares content with the target device which the tilting operation is toward.

In some other embodiments, when there are a plurality of target devices, the mobile phone 100 may alternatively share content with the plurality of target devices at the same time without considering the tilting direction if the tilting operation is detected, or share content with a target device closest to the mobile phone 100.

Before transmitting content to the laptop computer 200, the mobile phone 100 may establish a wireless communication connection by using a near field communication module, for example, a Bluetooth module, a Wi-Fi module, a millimeter wave module, or a UWB module, and perform content transmission after the connection is established.

The mobile phone 100 may establish a wireless communication connection to the laptop computer 200 after determining that the laptop computer 200 is the target device; or may establish a wireless communication connection to the laptop computer 200 after detecting the tilting operation. It can be understood that if the mobile phone 100 has established a connection to the laptop computer 200 before determining the target device, the mobile phone 100 may transmit content to the laptop computer 200 based on the connection during content sharing.

In view of security, the mobile phone 100 and the laptop computer 200 may perform security authentication before content is transmitted. For example, when establishing a wireless communication connection to the mobile phone 100, the laptop computer 200 may first determine whether the mobile phone 100 is a trusted device or is in a same local area network as the laptop computer 200. If the mobile phone 100 is a trusted device or is in the same local area network as the laptop computer 200, the laptop computer 200 may establish a wireless communication connection to the mobile phone 100 for content transmission; otherwise, the laptop computer 200 may decline to establish a wireless communication connection to the mobile phone 100.

Specifically, if a same account is logged in on the mobile phone 100 and the laptop computer 200, the laptop computer 200 may consider the mobile phone 100 as a trusted device of the laptop computer 200; and if different accounts are logged in on the mobile phone 100 and the laptop computer 200, but an account logged in on the mobile phone 100 is a trusted account of an account logged in on the laptop computer 200, the laptop computer 200 may also consider the mobile phone 100 as a trusted device of the laptop computer 200. In addition, if a device identifier of the mobile phone 100 is a trusted identifier of the laptop computer 200, the laptop computer 200 may also consider the mobile phone 100 as a trusted device of the laptop computer 200.

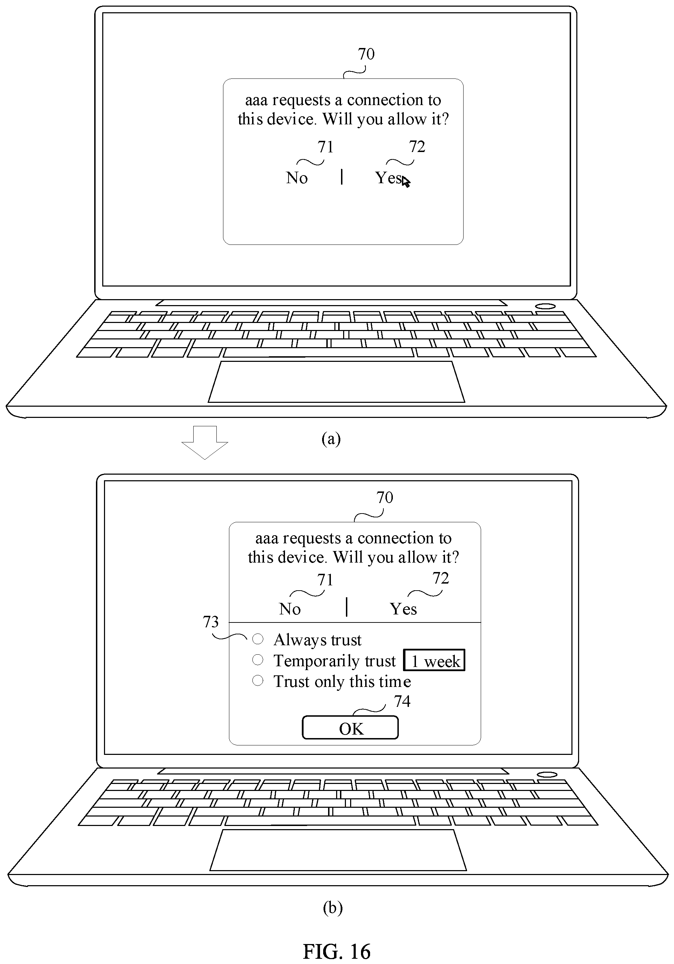

A user may add, on the laptop computer 200, the account logged in on the mobile phone 100 as a trusted account, or when the mobile phone 100 requests to establish a wireless communication connection to the laptop computer 200, the laptop computer 200 may display a box for authentication. For example, as shown in (a) in FIG. 16, the laptop computer 200 may display prompt information "aaa requests a connection to this device. Will you allow it?" and a "No" button 71 and a "Yes" button 72 in a displayed dialog box 70. The user may tap the "No" button 71 to decline the connection to the mobile phone 100 for declining to add the account logged in on the mobile phone 100 as a trusted account; or the user may tap the "Yes" button 72 to allow the mobile phone 100 to be connected to the laptop computer 200 and add the account logged in on the mobile phone 100 as a trusted account.

The trusted account may be subject to a trust validity period. The trust validity period may be preset. For example, when the laptop computer 200 adds the account logged in on the mobile phone 100 as a trusted account, the trust validity period of the trusted account may be set to one week. The trust validity period may alternatively be set by a user. For example, the laptop computer 200 may further display a trust validity period setting interface after the user taps the "Yes" button 72, and the user may set the trust validity period of the trusted account in the interface. For example, as shown in (b) in FIG. 16, the user may set the trust validity period to always trust, temporarily trust (for example, for one week or another time length), or trust only this time (after two devices are disconnected or have been disconnected for a period of time, the trust validity period expires) by using a radio button control 73, and then tap an "OK" button 74 to complete trust validity period setting. After the trust validity period of the account logged in on the mobile phone 100 expires, the account is no longer a trusted account, and the user may add the account as a trusted account again.

It can be understood that a manner of setting the trust validity period is not limited to the manner shown in FIG. 16, and may alternatively be implemented in another manner. For example, the laptop computer 200 may alternatively provide a trusted device setting function in system settings, and the user may alternatively perform setting related to a trusted device by using the function.

The account in embodiments of this application may be an account provided by a cloud service provider for a user, for example, a Huawei account; or may be an account to be logged in to an application.

A manner of setting a trusted identifier is similar to the manner of setting a trusted account. Details are not described herein again.

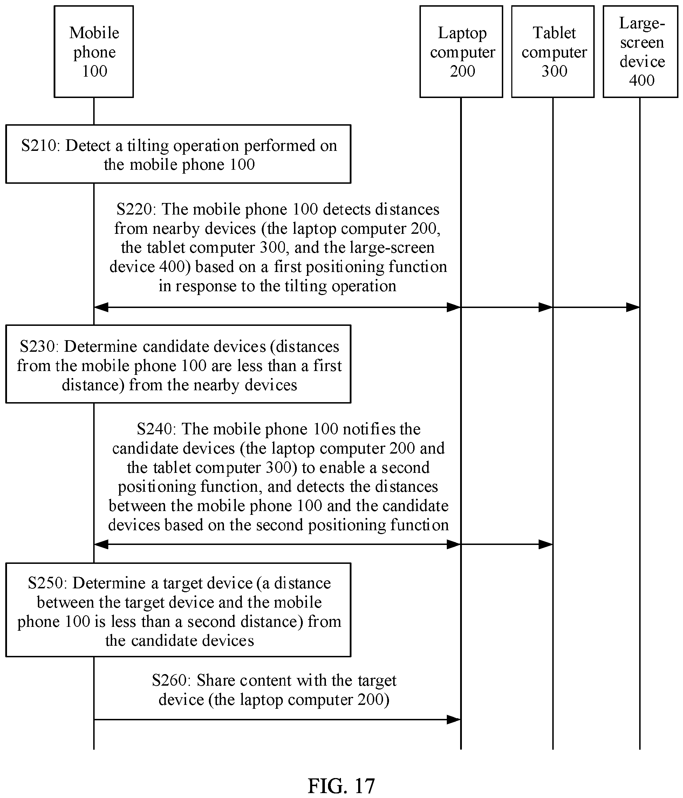

FIG. 7 shows a possible implementation process in which a user picks up a mobile phone 100 to share content with a laptop computer 200. Another possible implementation process in which a user picks up a mobile phone 100 to share content with a laptop computer 200 is described below. As shown in FIG. 17, the process may include the following steps.

S210: The mobile phone 100 detects a tilting operation performed on the mobile phone 100.

S220: The mobile phone 100 detects distances from nearby devices (the laptop computer 200, a tablet computer 300, and a large-screen device 400) based on a first positioning function in response to the tilting operation.

S230: The mobile phone 100 determines candidate devices from the nearby devices. Distances between the candidate devices and the mobile phone 100 are less than a first distance.

S240: The mobile phone 100 notifies the candidate devices (the laptop computer 200 and the tablet computer 300) to enable a second positioning function, and detects distances from the candidate devices based on the second positioning function.

S250: The mobile phone 100 determines a target device from the candidate devices. A distance between the target device and the mobile phone 100 is less than a second distance.

S260: The mobile phone 100 shares content with the target device (the laptop computer 200).

A main difference between the content sharing process shown in FIG. 17 and the content sharing process shown in FIG. 7 lies in that, in the content sharing process shown in FIG. 7, a condition for triggering the mobile phone 100 to detect the target device may be that it is detected that the mobile phone 100 is in a non-stationary state, and there is no strict time sequence execution relationship between a process in which the mobile phone 100 detects the target device and a process in which the mobile phone 100 detects the tilting operation. In the content sharing process shown in FIG. 17, a condition for triggering the mobile phone 100 to detect the target device is that the tilting operation is detected, that is, a process in which the mobile phone 100 detects the target device is performed after the mobile phone 100 detects the tilting operation. Another processing process in the content sharing process shown in FIG. 17 is similar to a corresponding processing process in the content sharing process shown in FIG. 7. For detailed descriptions, refer to the embodiment shown in FIG. 7. Details are not described herein again.

In the content sharing process shown in FIG. 7, the process in which the mobile phone 100 detects the target device may be performed and the process in which the mobile phone 100 detects the tilting operation in parallel. Therefore, the mobile phone 100 may detect the target device sooner, so that content can be shared with the target device as early as possible if the tilting operation is detected. This can improve a content sharing speed. In the content sharing process shown in FIG. 17, the mobile phone 100 first detects the tilting operation, and then the process of detecting the target device is performed. In this way, when a user moves the mobile phone 100 close to the target device, but does not perform the tilting operation with no intention to share content, the mobile phone 100 does not perform the process of detecting the target device, so that processing resources can be saved and energy consumption can be reduced. In actual application, any one of the foregoing content sharing solutions may be selected based on a requirement. This is not particularly limited in this embodiment.

A person skilled in the art can understand that the foregoing embodiments are examples and are not intended to limit this application. In a possible case, a sequence of performing one or more of the foregoing steps may be adjusted, or one or more of the steps may be selectively combined to obtain one or more other embodiments. A person skilled in the art may randomly select a combination from the foregoing steps based on a requirement, and any combination that does not depart from essence of the solutions of this application shall fall within the protection scope of this application.

According to the content sharing method provided in embodiments, the terminal device may share content with the target device if the target device and the tilting operation performed on the terminal device are detected. In this way, a user can quickly share content between two devices by placing the terminal device close to a nearby device and tilting the terminal device. Therefore, the method can simplify an operation process of a content sharing function and bring greater convenience for the user to use the content sharing function. In addition, the method does not rely on an NFC chip, and another positioning function with lower costs and stronger functionality may be used to detect the target device.

Based on a same inventive concept, as an implementation of the foregoing method, an embodiment of this application provides a content sharing apparatus. The apparatus embodiment corresponds to the foregoing method embodiment. For ease of reading, details in the foregoing method embodiment are not all described in the apparatus embodiment. However, it should be clarified that the apparatus in this embodiment can correspondingly implement all content in the foregoing method embodiment.

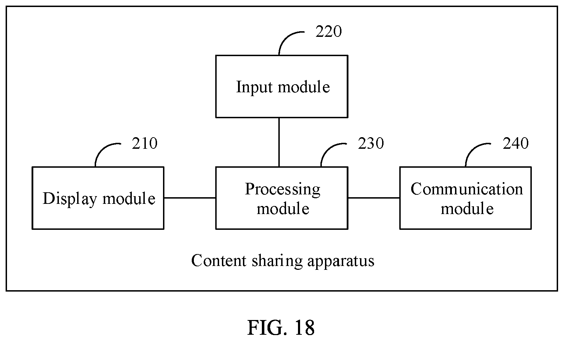

FIG. 18 is a schematic diagram of a structure of the content sharing apparatus according to this embodiment of this application. As shown in FIG. 18, the apparatus provided in this embodiment includes:
a display module 210, an input module 220, a processing module 230, and a communication module 240.

The display module 210 is configured to support a terminal device in performing an interface display operation in the foregoing embodiment and/or another process in the technology described in this specification. The display module may be a touchscreen, other hardware, or a combination of hardware and software.

The input module 220 is configured to receive an input of a user, for example, a touch input, a voice input, or a gesture input, in a display interface of the terminal device. The input module is configured to support the terminal device in performing a step of receiving a user operation in the foregoing embodiment and/or another process in the technology described in this specification. The input module may be a touchscreen, other hardware, or a combination of hardware and software.

The processing module 230 is configured to support the terminal device in performing a processing operation in the method steps in the foregoing embodiment and/or another process in the technology described in this specification.

The communication module 240 is configured to support the terminal device in performing an operation related to a communication process between the terminal device and another device in the foregoing embodiment and/or another process in the technology described in this specification.

The apparatus provided in this embodiment can perform the foregoing method embodiment, and implementation principles and technical effect are similar. Details are not described herein again.

A person skilled in the art may clearly understand that for the purpose of convenient and brief description, division into the foregoing functional units or modules is merely used as an example for description. In actual application, the foregoing functions can be allocated to different functional units or modules for implementation based on a requirement. In other words, an inner structure of the apparatus is divided into different functional units or modules to implement all or some of the functions described above. The functional units or modules in embodiments may be integrated into one processing unit, each of the units may exist alone physically, or two or more units are integrated into one unit. The integrated unit may be implemented in a form of hardware, or may be implemented in a form of a software functional unit. In addition, a specific name of each of the functional units or modules is merely for ease of distinguishing, but is not intended to limit the protection scope of this application. For a detailed working process of the foregoing units or modules in the foregoing system, refer to a corresponding process in the foregoing method embodiments. Details are not described herein again.

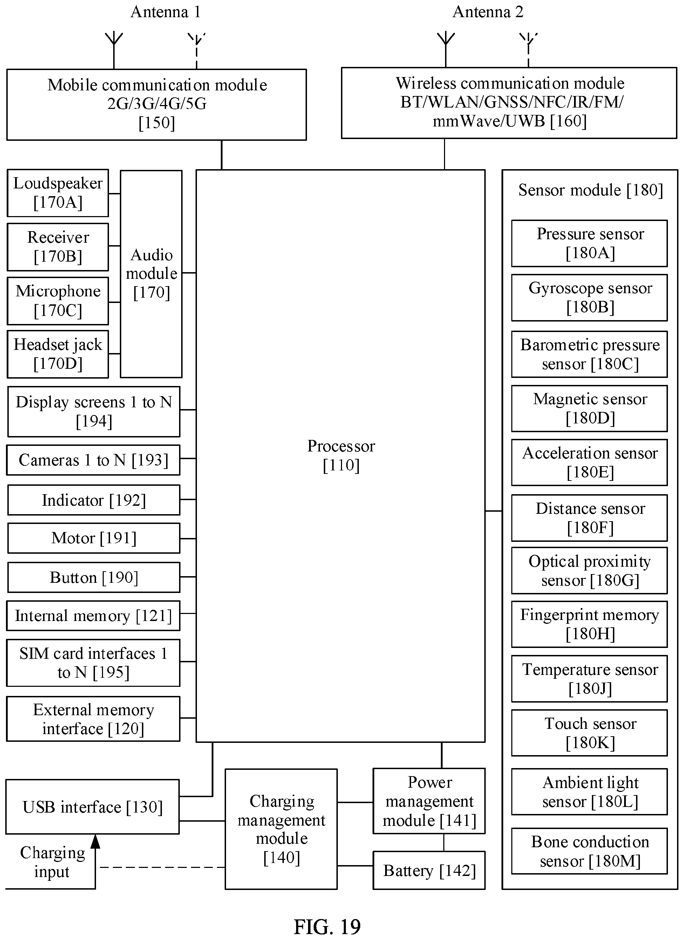

Based on a same concept, an embodiment of this application further provides a terminal device. FIG. 19 is a schematic diagram of a structure of a terminal device according to an embodiment of this application.

The terminal device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a loudspeaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the terminal device. In some other embodiments of this application, the terminal device may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural network processing unit (neural network processing unit, NPU). Different processing units may be independent components, or may be integrated into one or more processors.

The controller may be a nerve center and a command center of the terminal device. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has just been used or is cyclically used by the processor 110. If the processor 110 needs to use the instructions or the data again, the processor may directly invoke the instructions or the data from the memory. This avoids repeated access, reduces a time for waiting of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). The I2S interface may be used for audio communication. The PCM interface may also be used for audio communication, with analog signal sampling, quantization, and coding. The UART interface is a universal serial data bus used for asynchronous communication. The bus may be a bidirectional communication bus that converts data, to be transmitted, between serial communication and parallel communication. The MIPI interface may be used for connecting the processor 110 and a peripheral component, for example, the display screen 194 or the camera 193. The MIPI interface includes a camera serial interface (camera serial interface, CSI), a display serial interface (display serial interface, DSI), and the like. The GPIO interface may be configured by software. The GPIO interface may be configured with a control signal, or may be configured with a data signal. The USB interface 130 is an interface that conforms to a USB standard specification, and may be specifically a mini-USB interface, a micro-USB interface, a USB Type-C interface, or the like. The USB interface 130 may be used to connect to a charger to charge the terminal device, or may be used to transmit data between the terminal device and a peripheral device, or may be used to connect to a headset for playing audio through the headset. The interface may be further used to connect to another terminal device, for example, an AR device.

It can be understood that an interface connection relationship between the modules that are shown in this embodiment of this application is merely an example for description, and does not constitute a limitation on a structure of the terminal device. In some other embodiments of this application, the terminal device may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the terminal device. The charging management module 140 supplies power to the terminal device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the external memory, the display screen 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may be alternatively disposed in a same component.

A wireless communication function of the terminal device may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device may be used to cover one or more communication frequency bands. Different antennas may be further reused, to improve antenna utilization. For example, the antenna 1 may be reused as a diversity antenna in a wireless local area network. In some other embodiments, the antenna may be used in combination with a tuning switch.

The mobile communication module 150 may provide a wireless communication solution including 2G/3G/4G/5G that is applied to the terminal device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing, for example, filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least a part of functional modules of the mobile communication module 150 may be disposed in the processor 110. In some embodiments, at least a part of functional modules of the mobile communication module 150 and at least a part of modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal that is then transferred to the application processor. The application processor outputs a sound signal through an audio device (not limited to the loudspeaker 170A, the receiver 170B, and the like), or displays an image or a video by using the display screen 194. In some embodiments, the modem processor may be an independent component. In some other embodiments, the modem processor may be independent of the processor 110, and is disposed with the mobile communication module 150 or another functional module in the same device.

The wireless communication module 160 may provide a wireless communication solution that is applied to the terminal device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, a millimeter wave (millimeter wave, mmWave) technology, an ultra-wideband (ultra-wideband, UWB) technology, and the like. The wireless communication module 160 may be one or more components integrating at least one communication processor module. The wireless communication module 160 receives an electromagnetic wave through the antenna 2, performs frequency modulation and filtering on an electromagnetic wave signal, and sends a processed signal to the processor 110. The wireless communication module 160 may further receive a signal, that is to be transmitted, from the processor 110, perform frequency modulation and amplification on the signal, and convert the signal into an electromagnetic wave for radiation through the antenna 2.

In some embodiments, the antenna 1 and the mobile communication module 150 in the terminal device are coupled, and the antenna 2 and the wireless communication module 160 in the terminal device are coupled, so that the terminal device can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time division-synchronous code division multiple access (time division-synchronous code division multiple access, TD-SCDMA), long term evolution (long term evolution, LTE), BT, a GNSS, a WLAN, NFC, FM, IR, and/or the like. The GNSS may include a global positioning system (global positioning system, GPS), a global navigation satellite system (global navigation satellite system, GNSS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device may implement a display function by using the GPU, the display screen 194, the application processor, and the like. The GPU is a microprocessor for image processing, and is connected to the display screen 194 and the application processor. The GPU is configured to: perform mathematical and geometric computation, and render an image. The processor 110 may include one or more GPUs that execute a program instruction to generate or change display information.

The display screen 194 is configured to display an image, a video, or the like. The display screen 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the terminal device may include one or N display screens 194, and N is a positive integer greater than 1.

The terminal device may implement a photographing function by using the ISP, the camera 193, the video codec, the GPU, the display screen 194, the application processor, and the like.

The ISP is configured to process data fed back by the camera 193. The camera 193 is configured to capture a static image or a video. The digital signal processor is configured to process a digital signal, and may process another digital signal in addition to the digital image signal. The video codec is configured to compress or decompress a digital video.

The NPU is a neural-network (neural-network, NN) computing processor that quickly processes input information by referring to a structure of a biological neural network, for example, by referring to a mode of transmission between human brain neurons, and may further continuously perform self-learning. Applications such as intelligent cognition of the terminal device, for example, image recognition, facial recognition, speech recognition, and text understanding, may be implemented by using the NPU.

The internal memory 121 may be configured to store computer-executable program code. The executable program code includes instructions. The processor 110 runs the instructions stored in the internal memory 121, to perform various function applications and data processing on the terminal device. The internal memory 121 may include a program storage area and a data storage area. The program storage area may store an operating system, an application required for at least one function (for example, a sound play function or an image play function), and the like. The data storage area may store data (for example, audio data and an address book) and the like that are created during use of the terminal device. In addition, the internal memory 121 may include a high-speed random access memory, and may further include a non-volatile memory, for example, at least one magnetic disk storage device, a flash storage device, or a universal flash storage (universal flash storage, UFS).

The external memory interface 120 may be used to connect to an external memory, for example, a micro SD card, to extend a storage capability of the terminal device. The external memory card communicates with the processor 110 through the external memory interface 120, to implement a data storage function. For example, files such as music and a video are stored in the external memory card.

The terminal device may implement an audio function, for example, music play or recording, by using the audio module 170, the loudspeaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110, or a part of functional modules of the audio module 170 are disposed in the processor 110. The loudspeaker 170A, also referred to as a "speaker", is configured to convert an electrical audio signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal. The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association, CTIA of the USA) standard interface.

The terminal device may also send an ultrasonic wave by using the loudspeaker 170A, and receive the ultrasonic wave by using the microphone 170C, to implement an ultrasonic wave technology.

The button 190 includes a power button, a volume button, and the like. The button 190 may be a mechanical button, or may be a touch button. The terminal device may receive a button input, and generate a keying signal input related to user settings and function control on the terminal device. The motor 191 may generate a vibration prompt. The motor 191 may be configured to produce an incoming call vibration prompt, and may be configured to provide touch vibration feedback. The indicator 192 may be an indicator light, may be configured to indicate a charging status and a power change, and may be configured to indicate a message, a missed call, a notification, and the like. The SIM card interface 195 is used to connect a SIM card. The SIM card may be inserted into the SIM card interface 195 or removed from the SIM card interface 195, to implement contact with or separation from the terminal device. The terminal device may support one or N SIM card interfaces, where N is a positive integer greater than 1. The SIM card interface 195 may support a nano-SIM card, a micro-SIM card, a SIM card, and the like.

The terminal device provided in embodiments can perform the foregoing method embodiment, and implementation principles and technical effect are similar. Details are not described herein again.

An embodiment of this application further provides a computer-readable storage medium storing computer program. When the computer program is executed by a processor, the method in the foregoing method embodiment is implemented.

An embodiment of this application further provides a computer program product. When the computer program product runs on a terminal device, the terminal device is enabled to implement the method in the foregoing method embodiment when executing the computer program product.

An embodiment of this application further provides a chip system, including a processor. The processor is coupled to a memory, and the processor executes a computer program stored in the memory, to implement the method in the foregoing method embodiment. The chip system may be a single chip or a chip module including a plurality of chips.

All or some of the foregoing embodiments may be implemented by using software, hardware, firmware, or any combination thereof. When software is used for implementation, all or some of embodiments may be implemented in a form of a computer program product. The computer program product includes one or more computer instructions. When the computer program instruction is loaded and executed on a computer, the procedures or functions according to embodiments of this application are all or partially generated. The computer may be a general-purpose computer, a dedicated computer, a computer network, or another programmable apparatus. The computer instruction may be stored in a computer-readable storage medium, or may be transmitted by using the computer-readable storage medium. The computer instruction may be transmitted from a website, computer, server, or data center to another website, computer, server, or data center in a wired (for example, by using a coaxial cable, an optical fiber, or a digital subscriber line) or wireless (for example, via infrared, radio, or microwaves) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

A person of ordinary skill in the art can understand that all or some of procedures in the method in the foregoing embodiments may be implemented by a computer program instructing related hardware. The program may be stored in a computer-readable storage medium. When the program is executed, the procedures in the method embodiments may be performed. The storage medium may include any medium that can store program code, for example, a ROM or a random access memory RAM, a magnetic disk, or an optical disc.

Names or serial numbers of steps in this application do not mean that the steps of a procedure in the method need to be performed in a time/logical sequence indicated by the names or serial numbers. A sequence of performing the steps of the procedure that have been named or numbered may be changed based on a technical objective to be achieved, provided that same or similar technical effect can be achieved.

In the foregoing embodiments, the descriptions of each embodiment have respective focuses. For a part of an embodiment that is not described or explained in detail, refer to related descriptions of another embodiment.

In embodiments provided in this application, it should be understood that the disclosed apparatus/device and method may be implemented in another manner. For example, the described apparatus/device embodiment is merely an example. For example, division into the modules/units is merely logical function division and may be other division in actual implementation. For example, a plurality of units or components may be combined or integrated into another system, or some features may be ignored or not performed. In addition, the displayed or discussed mutual coupling or direct coupling or communication connections may be implemented through some interfaces. The indirect coupling or communication connections between the apparatuses or units may be implemented in electrical, mechanical, or another form.

It should be understood that, in the description and the appended claims of this application, terms such as "include", "have", and any variations thereof are intended to cover non-exclusive inclusions, for example, a process, method, system, product, or device that includes a series of steps or modules, which are not necessarily limited to those clearly listed steps or modules, but may include other steps or modules that are not clearly listed or inherent to such a process, method, product, or device.

In the descriptions of this application, unless otherwise stated, "/" indicates an "or" relationship between associated objects. For example, A/B can represent A or B. The term "and/or" in this application merely describes an association relationship between associated objects and indicates that three relationships may exist. For example, A and/or B may represent the following three cases: Only A exists, both A and B exist, or only B exists, where A and B may be singular or plural.

In addition, in the descriptions of this application, unless otherwise stated, "a plurality of" means two or more. "At least one of the following items" or a similar expression thereof means any combination of these items, including any combination of singular items or plural items. For example, at least one of a, b, or c may represent a; b; c; a and b; a and c; b and c; or a, b, and c, where a, b, and c may be singular or plural.

As used in the description and the appended claims of this application, the term "if" may be interpreted as "when", "once", or "in response to determining" or "in response to detecting" based on the context. Similarly, the phrase "if it is determined" or "if [a described condition or event] is detected" may be interpreted, based on the context, as meaning "once determined", "in response to determining", "once [the described condition or event] is detected", or "in response to detecting [the described condition or event]".

In addition, as described in the description and the appended claims of this application, the terms "first", "second", "third", and the like are used to distinguish between similar objects, and are not necessarily intended to describe a specific order or sequence. It should be understood that data termed in such a way is interchangeable in proper circumstances, so that embodiments described herein can be implemented in an order other than the content illustrated or described herein.

Reference to "an embodiment", "some embodiments", or the like described in the description of this application indicates that one or more embodiments of this application includes/include a specific feature, structure, or characteristic described with reference to those embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of the embodiments", unless otherwise particularly emphasized in another manner.

Finally, it should be noted that the foregoing embodiments are merely intended for describing the technical solutions of this application, not for limiting this application. Although this application is described in detail with reference to the foregoing embodiments, a person of ordinary skill in the art should understand that modifications may still be made to the technical solutions described in the foregoing embodiments or equivalent replacements may be made to some or all technical features thereof, without departing from the scope of the technical solutions in embodiments of this application.

## Claims

1. A content sharing method, applied to a terminal device, comprising:
detecting a target device and a tilting operation performed on the terminal device, wherein a distance between the target device and the terminal device is less than or equal to a target distance; and
sharing content with the target device in response to the tilting operation if the target device and the tilting operation are detected.

2. The method according to claim 1, wherein the content is shared with the target device in response to the tilting operation if a tilting direction of the tilting operation is toward the target device.

3. The method according to claim 1 or 2, wherein the detecting a target device comprises:
determining at least one candidate device based on a first positioning function, wherein a distance between the at least one candidate device and the terminal device is less than a first distance, and the first distance is greater than the target distance;
notifying the at least one candidate device to enable a second positioning function; and
determining the target device from the at least one candidate device based on the second positioning function, wherein
positioning precision of the first positioning function is less than positioning precision of the second positioning function, or power consumption of the first positioning function is greater than power consumption of the second positioning function.

4. The method according to claim 3, wherein
the first positioning function comprises at least one of a Bluetooth positioning function and a Wi-Fi positioning function; and
the second positioning function comprises at least one of an ultrasonic positioning function, a millimeter wave positioning function, and an ultra-wideband positioning function.

5. The method according to any one of claims 1 to 4, wherein the detecting a tilting operation comprises:
if it is detected that a first operation performed on the terminal device satisfies a first condition, determining that the tilting operation is detected, wherein the first operation is an operation of rotating the terminal device around a target rotation axis, the target rotation axis is an axis along a length direction or a width direction of the terminal device, and the first condition comprises that the terminal device is rotated by a first angle within a first time length, wherein the first angle is within a first angle range.

6. The method according to claim 5, wherein when the first operation is performed, the terminal device is in a state with a screen facing up.

7. The method according to claim 6, wherein when the terminal device is in the state with the screen facing up, an included angle between a normal direction of the screen of the terminal device and any horizontal direction is greater than 0 degrees and less than 180 degrees.

8. The method according to any one of claims 5 to 7, wherein the first angle range is [15°, 105°], and the first angle within the first angle range satisfies 15°≤the first angle≤105°.

9. The method according to any one of claims 5 to 8, wherein the first condition further comprises:
after the terminal device is rotated by the first angle within the first time length, the terminal device stays stationary for a second time length; and/or
in a process in which the terminal device is rotated by the first angle, a rotational angular acceleration is greater than or equal to a first angular acceleration.

10. The method according to any one of claims 5 to 9, wherein the method further comprises:
if it is detected that the first operation does not satisfy the first condition and that a second operation performed after the first operation satisfies a second condition, determining that the tilting operation is detected, wherein
the second operation is an operation of rotating the terminal device around the target rotation axis, a rotation direction of the second operation is the same as a rotation direction of the first operation, and the second condition comprises that the terminal device is rotated by a second angle within a third time length, wherein the second angle is within a second angle range.

11. The method according to claim 10, wherein the second condition further comprises at least one of the following:
after the terminal device is rotated by the second angle within the third time length, the terminal device stays stationary for a fourth time length;
the third time length is less than the first time length;
a lower limit of an angle within the second angle range is less than a lower limit of an angle within the first angle range; and
an upper limit of an angle within the second angle range is less than an upper limit of an angle within the first angle range.

12. The method according to any one of claims 1 to 11, wherein an operation of detecting the target device is started if it is detected that the terminal device is in a non-stationary state.

13. The method according to claim 12, wherein the operation of detecting the target device is started if it is detected that the terminal device is in a moving state.

14. The method according to any one of claims 1 to 11, wherein an operation of detecting the target device is started if the tilting operation is detected.

15. The method according to any one of claims 1 to 14, wherein if a plurality of target devices are detected, in response to the tilting operation, content is shared with a target device which the tilting direction of the tilting operation is toward.

16. The method according to any one of claims 1 to 14, wherein if a plurality of target devices are detected, content is shared with each target device in response to the tilting operation.

17. The method according to any one of claims 1 to 16, wherein the content shared with the target device comprises at least one of the following: a file, projected content, and application running information.

18. The method according to any one of claims 1 to 17, wherein the method further comprises: sending a position relationship between the terminal device and the target device to the target device in response to the tilting operation, wherein the position relationship is used by the target device to display, on a side of a screen closer to the terminal device, the content shared by the terminal device.

19. The method according to any one of claims 1 to 18, wherein the target device and the terminal device are in a same local area network, and/or the terminal device is a trusted device of the target device; and
a same account is logged in on the trusted device of the target device and the target device, an account logged in on the trusted device of the target device is a trusted account of an account logged in on the target device, or a device identifier of the trusted device of the target device is a trusted identifier of the target device.

20. The method according to claim 19, wherein the trusted device is subject to a trust validity period, and the trust validity period is set by the target device based on an operation of a user.

21. A terminal device, comprising a memory and a processor, wherein the memory is configured to store a computer program, and the processor is configured to, when the computer program is invoked, enable the terminal device to perform the method according to any one of claims 1 to 20.

22. A computer-readable storage medium, storing a computer program, wherein when the computer program is executed by a processor, the method according to any one of claims 1 to 20 is implemented.

23. A computer program product, wherein when the computer program product runs on an electronic device, the electronic device is enabled to perform the method according to any one of claims 1 to 20.

24. A chip system, wherein the chip system comprises a processor, the processor is coupled to a memory, and the processor executes a computer program stored in the memory, to implement the method according to any one of claims 1 to 20.
